# EUROPEAN PATENT APPLICATION

(11) **EP 4 712 032 A1**
(43) Date of publication of application: **18.03.2026**
(21) Application number: 24803361.5
(22) Date of filing: 22.04.2024
(51) Int. Cl.: G06T 13/40, G06F 3/01

(54) **INFORMATION PROCESSING DEVICE, INFORMATION PROCESSING METHOD, AND RECORDING MEDIUM**

(30) Priority: 09.05.2023 JP 2023077257
(71) Applicant: Sony Group Corporation, Tokyo 108-0075 (JP)
(72) Inventor: ISHIKAWA Tomoya, Tokyo 108-0075 (JP); KIKUKAWA Tetsuya, Tokyo 108-0075 (JP); FURITSU Yuki, Tokyo 108-0075 (JP)
(74) Representative: MFG Patentanwälte Meyer-Wildhagen Meggle-Freund Gerhard PartG mbB
(86) International application number: PCT/JP2024/015671
(87) International publication number: WO 2024/232248

(57) **Abstract**

The present technology relates to an information processing device, an information processing method, and a recording medium that enable persons located remotely from each other to smoothly communicate via their respective avatars.

An information processing device according to one aspect of the present technology is configured to: generate, on the basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and select an action to be reproduced by the second avatar. The present technology can be applied to a system in which persons located remotely from each other wear AR display devices and communicate via their respective avatars.

## Description

### TECHNICAL FIELD

The present technology relates to an information processing device, an information processing method, and a recording medium, and more particularly, to an information processing device, an information processing method, and a recording medium that enable persons located remotely from each other to smoothly communicate via their respective avatars.

### BACKGROUND ART

One technology for reproducing a person's actions with an avatar involves the use of a wearable or optical motion capture system. By measuring the joint positions of a person using the motion capture system to obtain 3D full-body pose data with low latency and at high frequency, it is possible to present an avatar that reproduces the same actions as the person with high fidelity.

### CITATION LIST

### PATENT DOCUMENT

Patent Document 1: WO 2022/209450 A
Patent Document 2: WO 2020/012727 A

### SUMMARY OF THE INVENTION

### PROBLEMS TO BE SOLVED BY THE INVENTION

A remote communication system that enables persons located remotely from each other to communicate via their respective avatars is available. Each of the persons located remotely from each other wears a display device such as augmented reality (AR) glasses, and communicates by talking to the avatar of the other person who appears as if they are present in the same space or by reacting to the action and utterance of the avatar of the other person.

The action of the avatar of the other person being watched by one person is performed in response to recognition of the real action of the other person at a remote location and transmission of the action data. In a case where latency in the action data transmission, or similar factors, cause a discrepancy between the timing of the action of the avatar of the other person expected by one person and the actual timing at which the avatar of the other person performs the action, effective communication becomes difficult.

The present technology has been made in view of such circumstances, and it is therefore an object of the present technology to enable persons located remotely from each other to smoothly communicate via their respective avatars.

### SOLUTIONS TO PROBLEMS

An information processing device according to a first aspect of the present technology includes an information processing unit configured to: generate, on the basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and select an action to be reproduced by the second avatar on the basis of a similar scene graph including a graph structure similar to a graph structure of the first scene graph, the similar scene graph being included in a plurality of second scene graphs, the plurality of second scene graphs being generated in advance on the basis of a sensor measurement result indicating a plurality of arbitrary objects including a plurality of arbitrary persons and including nodes that represent the plurality of arbitrary objects at different times and are connected by a change edge representing a temporal change in state.

An information processing device according to a second aspect of the present technology includes a generation unit configured to generate a scene graph on the basis of a sensor measurement result indicating a plurality of objects including a plurality of persons, the scene graph including: nodes that represent the plurality of objects at each time and are connected by a relationship edge representing a relationship between the plurality of objects; and nodes that represent the plurality of objects at different times and are connected by a change edge representing a temporal change in state.

According to the first aspect of the present technology, a first scene graph including nodes that represent a plurality of objects at different times and are connected by a change edge representing a temporal change in state is generated on the basis of a sensor measurement result indicating the plurality of objects, the plurality of objects including a first person watching a second avatar that reproduces an action corresponding to an action of a second person and the second person watching a first avatar that reproduces an action corresponding to an action of the first person, and an action to be reproduced by the second avatar is selected on the basis of a similar scene graph including a graph structure similar to a graph structure of the first scene graph, the similar scene graph being included in a plurality of second scene graphs, the plurality of second scene graphs being generated in advance on the basis of a sensor measurement result indicating a plurality of arbitrary objects including a plurality of arbitrary persons and including nodes that represent the plurality of arbitrary objects at different times and are connected by a change edge representing a temporal change in state.

According to the second aspect of the present technology, a scene graph is generated on the basis of a sensor measurement result indicating a plurality of objects including a plurality of persons, the scene graph including nodes that represent the plurality of objects at each time and are connected by a relationship edge representing a relationship between the plurality of objects, and nodes that represent the plurality of objects at different times and are connected by a change edge representing a temporal change in state.

### BRIEF DESCRIPTION OF DRAWINGS

Fig. 1 is a diagram illustrating an example of communication enabled through the use of an AR application.
Fig. 2 is a diagram illustrating an example of a discrepancy in remote communication.
Fig. 3 is a diagram illustrating an example of an overall processing flow in an information processing system according to an embodiment of the present technology.
Fig. 4 is a diagram illustrating an example of processing in a person action learning phase.
Fig. 5 is a diagram illustrating an example of a graph representing space information.
Fig. 6 is a diagram illustrating an example of a graph representing person attribute information.
Fig. 7 is a diagram illustrating an example of a graph representing relationship information.
Fig. 8 is a flowchart for describing spatiotemporal scene graph construction/recording processing.
Fig. 9 is a diagram illustrating an example of a graph representing a recognition result.
Fig. 10 is a diagram illustrating an example of a space scene graph.
Fig. 11 is a diagram illustrating an example of time-series state likelihood.
Fig. 12 is a diagram illustrating an example of a spatiotemporal scene graph.
Fig. 13 is a diagram illustrating an example of processing in a person action reproduction phase.
Fig. 14 is a flowchart for describing candidate person action prediction processing.
Fig. 15 is a diagram illustrating an example of a graph-to-graph distance.
Fig. 16 is a diagram illustrating an example of a spatiotemporal scene graph including candidate predicted actions.
Fig. 17 is a flowchart for describing predicted action space adaptation processing.
Fig. 18 is a diagram illustrating an example of calculating the multiplier for avatar's action speed.
Fig. 19 is a diagram illustrating an example of a destination change.
Fig. 20 is a block diagram illustrating a functional configuration example of an information processing device.
Fig. 21 is a block diagram illustrating a functional configuration example of the information processing device.
Fig. 22 is a block diagram illustrating a configuration example of the information processing system.
Fig. 23 is a block diagram illustrating a configuration example of a computer.

### MODE FOR CARRYING OUT THE INVENTION

Hereinafter, modes for carrying out the present technology will be described. The description will be given in the following order.
1. Overview of present technology
2. Processing flow in information processing system
3. Person action learning phase
4. Person action reproduction phase
5. Conclusion
6. Configuration of each device
7. Modifications

### <<Overview of present technology>>

An AR application to which the present technology is applied is an application used by a real person (hereinafter, simply referred to as a person) wearing an AR display device to communicate with the other person in a remote space. Wearing the AR display device allows an avatar of the other person to be displayed as if the avatar is present around the person. Each person communicates with the other person in a remote space by talking to the avatar of the other person displayed on the AR display device or by reacting to the action and utterance of the avatar of the other person.

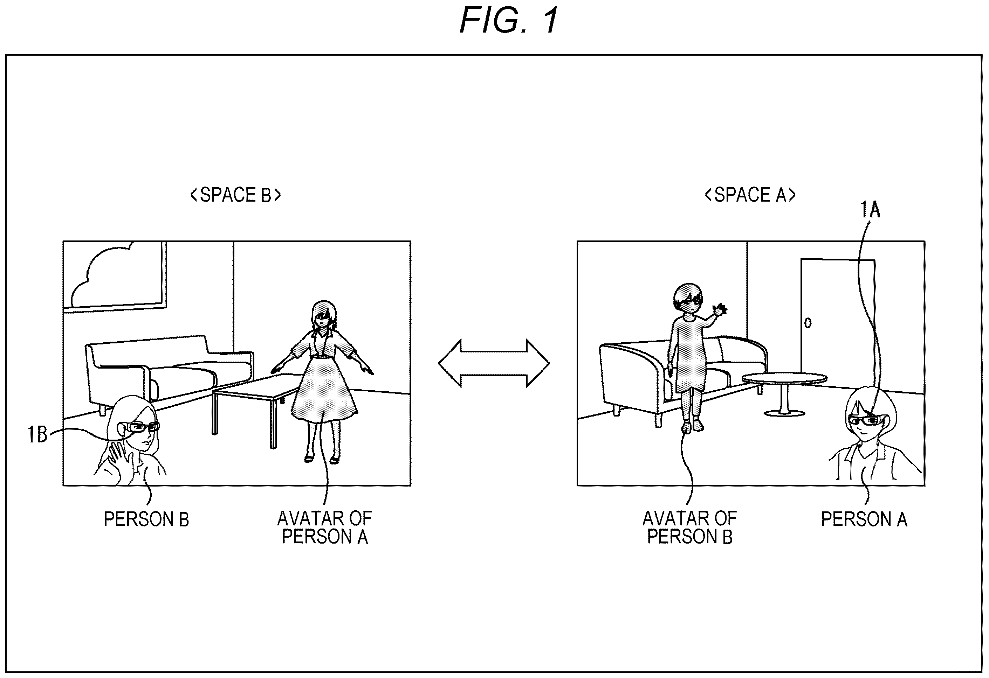

Fig. 1 is a diagram illustrating an example of communication enabled through the use of the AR application.

A space A illustrated on the right side of Fig. 1 is a space where a person A is present. An avatar of a person B who is the person on the other side of communication is displayed on an AR display device 1A worn by the person A. The AR display device 1A is, for example, an optical see-through head mounted display (HMD). In the present disclosure, an optical see-through AR HMD with a design similar to glasses may be referred to as AR glasses. The display of the avatar of the person B is controlled to ensure that the avatar acts in a similar manner to the person B in response to recognition of the action of the person B.

The AR display device 1A is equipped with an audio output function using a speaker or the like and an audio detection function using a microphone. From the AR display device 1A, voice uttered by the person B is output as voice of the avatar of the person B and delivered to the person A. The person A can feel as if the person B represented by the avatar is present nearby by watching the avatar that performs an action corresponding to the real action of the person B in a space B or listening to the voice of the person B uttered by the avatar.

On the other hand, the space B illustrated on the left side of Fig. 1 is a space where the person B is present. The space A and the space B are spaces located remotely from each other. The avatar of the person A who is the person on the other side of communication is displayed on an AR display device 1B worn by the person B. The AR display device 1B is also a pair of optical see-through AR glasses, similar to the AR display device 1A. The display of the avatar of the person A is controlled to ensure that the avatar acts in a similar manner to the person A in response to recognition of the action of the person A.

The AR display device 1B is equipped with an audio output function using a speaker or the like and an audio detection function using a microphone. From the AR display device 1B, voice uttered by the person A is output as voice of the avatar of the person A and delivered to the person B. The person B can feel as if the person A represented by the avatar is present nearby by watching the avatar that performs an action corresponding to the real action of the person A in the space A or listening to the voice of the person A uttered by the avatar.

In the example illustrated in Fig. 1, the avatar of the person B watched by the person A is waving in response to the person B waving. The action of the person B waving is detected on the basis of sensor data, and control is performed to reflect the recognition result in the action of the avatar of the person B watched by the person A.

In Fig. 1, a dot pattern applied to the avatar of the person A and the avatar of the person B represents that each avatar is a virtual object displayed by the AR display device. Although the avatar is shown a humanoid object, virtual objects with shapes different from those of humans, such as objects representing real animals or imaginary creatures, may be used as the avatar.

Instead of using the optical see-through AR glasses as the AR display devices 1A and 1B, other display devices, such as video see-through HMDs and smartphones, may be used. Hereinafter, unless otherwise distinguished, the AR display devices 1A and 1B are collectively referred to as an AR display device 1 where appropriate.

As described above, the AR application to which the present technology is applied enables remote communication via the avatar of each person.

In a case where the action of each person is reproduced by the avatar as in the remote communication illustrated in Fig. 1, for example, a wearable or optical motion capture system is used to detect the action of the person. By measuring the joint positions of the person using the motion capture system, 3D full-body pose data can be obtained with low latency and at high frequency; however, to reproduce, as the avatar's action, the same action as that of the person, the measured space and the reproduced space need to be environments with similar conditions.

In the present technology, spatial retargeting is used to enable virtual characters such as avatars to act with the same intent even in different spaces. Spatial retargeting is described, for example, in Document 1.

Document 1 "[Tahara+, ISMAR2020] T. Tahara, T. Seno, G. Narita and T. Ishikawa, "Retargetable AR: Context-aware Augmented Reality in Indoor Scenes based on 3D Scene Graph", ISMAR, 2020."

Spatial retargeting is a technology for abstractly representing the intent of the action of a person in a certain space to reproduce an action with the same intent as an avatar's action in another space. Using spatial retargeting makes it possible to circumvent the above-described spatial constraints; however, the latency required to recognize a person's action, transmit information regarding the action, and reproduce the action as an avatar's action may cause a discrepancy in remote communication.

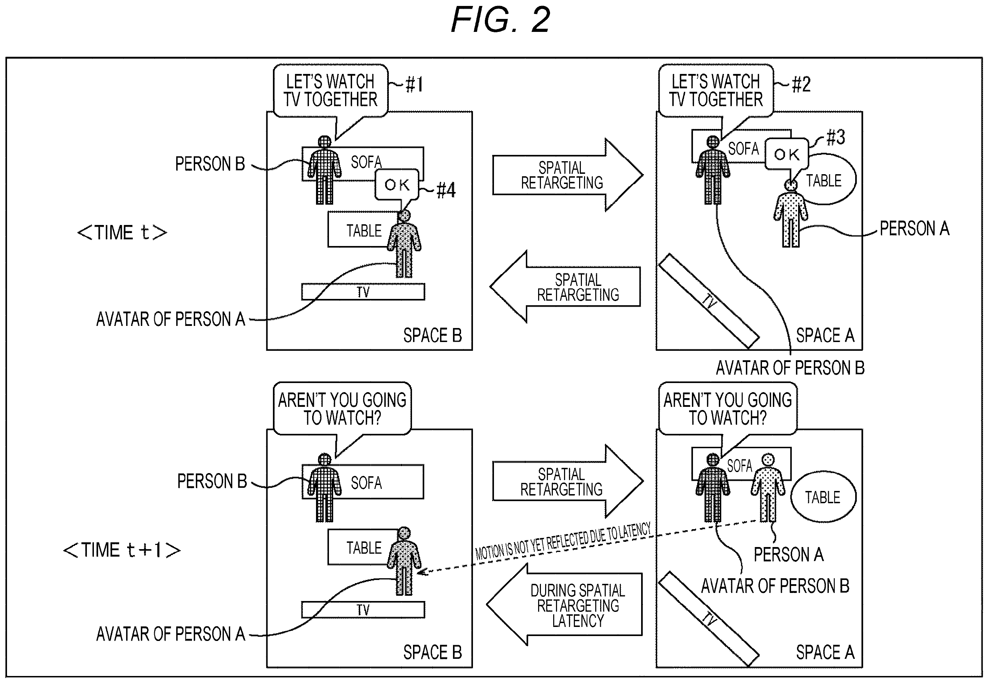

Fig. 2 is a diagram illustrating an example of the discrepancy in remote communication.

The upper part of Fig. 2 illustrates states of the space A and the space B at time t, and the lower part illustrates states of the space A and the space B at time t+1. At each time, the person A present in the space A and the person B present in the space B communicate with each other via their respective avatars as described with reference to Fig. 1. Audio is transmitted with low latency.

At time t, it is assumed that the person B who is present in the space B illustrated on the left side and sitting on the sofa suggests that the person A sits on the sofa and watches TV together as shown in speech balloon #1. The suggestion for the person A standing on the floor is made by the person B talking to the avatar of the person A watched by the person B. As shown in speech balloon #2, the voice of the person B is output as the voice of the avatar of the person B with low latency by the AR display device 1A worn by the person A in the space A.

In a case where the person A responds to the suggestion from the person B by voice as shown in speech balloon #3, the voice of the person A is output, as shown in speech balloon #4, as the voice of the avatar of the person A with low latency by the AR display device 1B worn by the person B in the space B. The person B who has heard a reply from the person A expects the person A (the avatar of the person A) to perform the action of sitting on the sofa and watching TV. At this point in time, the person A who has accepted the suggestion from the person B starts performing the action of approaching and sitting on the sofa in the space A.

Time t+1 is, for example, timing immediately after the person A sits on the sofa in the space A. At time t+1, the person A sits on the sofa in the space A and starts watching TV; however, as described above, it takes time to recognize the action of the person A, transmit information regarding the action, and reproduce the action as the action of the avatar, causing the avatar of the person A in the space B to remain standing in the same state as at time t. Since the action of the avatar of the person A at time t+1 is different from the action expected by the person B, the situation illustrated in Fig. 2 shows a case where a discrepancy occurs in communication.

In the remote communication enabled by the AR application, processing to compensate for latency required from the start of the action of a remote person to the action reproduction by the avatar is performed. This enables, even in a case where persons located remotely from each other communicate via their respective avatars, the persons to smoothly communicate with each other.

### <<Processing flow in information processing system>>

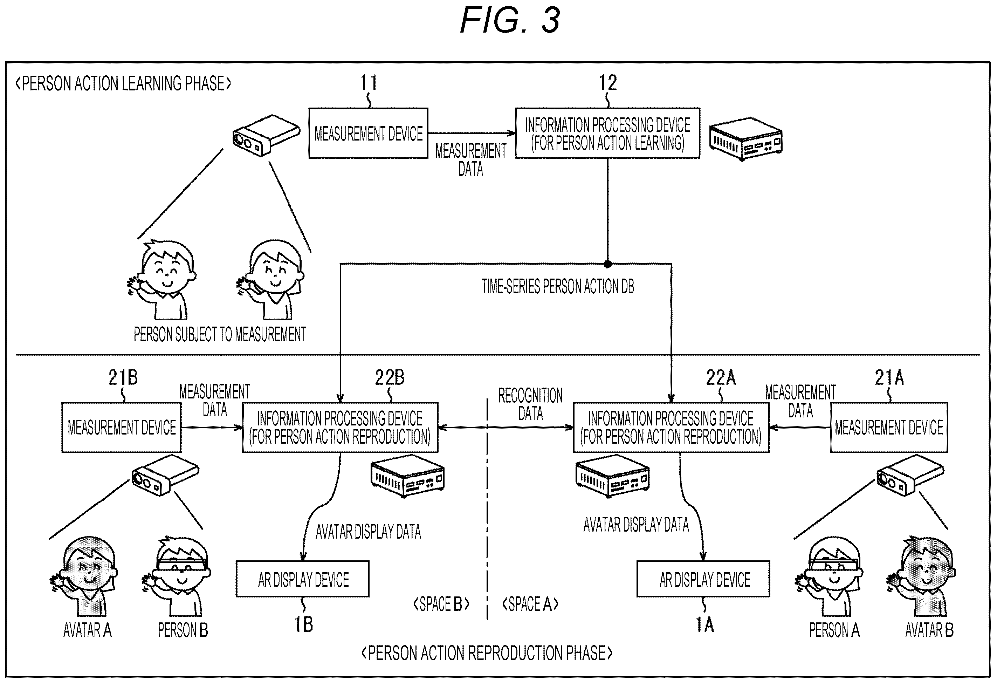

Fig. 3 is a diagram illustrating an example of an overall processing flow in an information processing system according to an embodiment of the present technology.

As illustrated in Fig. 3, a series of processing steps in the information processing system includes two processing phases: a "person action learning phase" and a "person action reproduction phase". The information processing system includes person action learning-side components and person action reproduction-side components.

As illustrated in the upper part of Fig. 3, a measurement device 11 and an information processing device 12 are provided as the person action learning-side components. The measurement device 11 and the information processing device 12 are connected via wired or wireless communication.

The measurement device 11 is a sensor device equipped with various sensors such as a color image sensor and a depth sensor. The measurement device 11 is installed in a room or the like where a real person is present. In the example illustrated in Fig. 3, the measurement device 11 is installed in a space where the person A and the person B are present; alternatively, the measurement device 11 may be installed in a space where a plurality of persons other than the person A and the person B is present. The plurality of persons subject to measurement communicates with each other through conversation and gestures.

The measurement device 11 measures the person subject to measurement and outputs measurement data such as a color image and a depth image to the information processing device 12. The color image output from the measurement device 11 shows not only the person subject to measurement but also surrounding objects such as furniture around the person. The depth image measured by the measurement device 11 represents distances to the person and the surrounding objects such as furniture.

The information processing device 12 analyzes the color image supplied from the measurement device 11 as measurement data and performs image recognition and the like to recognize person attributes such as age, gender, and height. Furthermore, the information processing device 12 analyzes the color image and the depth image to recognize objects around the person, an object-to-object relationship, a person-to-person relationship, and the like. The information processing device 12 generates a spatiotemporal scene graph on the basis of the recognition result and records the spatiotemporal scene graph in a time-series person action DB.

The time-series person action DB is a set of spatiotemporal scene graphs. The processing in the person action learning phase is repeatedly performed using a space where various persons are present as a measurement target. In the time-series person action DB, information regarding a plurality of spatiotemporal scene graphs generated by measuring the space where various persons are present is recorded.

The time-series person action DB generated by the information processing device 12 is supplied to an information processing device 22A installed in the space A and an information processing device 22B installed in the space B as person action reproduction-side component. The information processing device 12, the information processing device 22A, and the information processing device 22B are connected via a network such as the Internet. The space A and the space B are spaces where the person A and the person B are present, respectively. The person A and the person B located remotely from each other are persons who communicate via their respective avatars as described above.

As illustrated in the lower right side of Fig. 3, the AR display device 1A, a measurement device 21A, and the information processing device 22A are installed in the space A. The measurement device 21A and the information processing device 22A are connected via wired or wireless communication. The AR display device 1A worn by the person A who communicates with the person B as the user of the AR application is also connected to the information processing device 22A via wired or wireless communication.

The measurement device 21A is a sensor device equipped with various sensors such as a color image sensor and a depth sensor, similar to the measurement device 11. The measurement device 21A measures the action of the person A and outputs measurement data such as a color image and a depth image corresponding to the measurement result to the information processing device 22A.

The information processing device 22A transmits AR content data to the AR display device 1A to display the avatar of the person B. Hereinafter, the avatar of the person B watched by the person A is referred to as an avatar B, and the avatar of the person A watched by the person B is referred to as an avatar A where appropriate. In Fig. 3, the avatar B watched by the person A is illustrated with a dot pattern applied to the person B. Furthermore, the avatar A watched by the person B is illustrated with a dot pattern applied to the person A. This similarly applies to the other drawings described later.

Furthermore, the information processing device 22A performs various types of recognition processing on the basis of the measurement data supplied from the measurement device 21A to generate a spatiotemporal scene graph representing the context of the space A where the person A is present. The information processing device 22A compares the spatiotemporal scene graph representing the context of the space A with the spatiotemporal scene graphs generated by the processing in the person action learning phase to predict the next action of the person B who is at a remote location. The information processing device 22A reproduces the action of the person B as the action of the avatar B on the basis of the predicted action of the person B and the spatial layout of the space A. The action of the person B is reproduced by displaying the avatar B performing the predicted action.

As illustrated in the lower left side of Fig. 3, the AR display device 1B, a measurement device 21B, and the information processing device 22B are installed in the space B. The measurement device 21B and the information processing device 22B are connected via wired or wireless communication. The AR display device 1B worn by the person B who communicates with the person A as the user of the AR application is also connected to the information processing device 22B via wired or wireless communication.

The measurement device 21B is a sensor device equipped with various sensors such as a color image sensor and a depth sensor, similar to the measurement device 11. The measurement device 21B measures the action of the person B and outputs measurement data such as a color image and a depth image corresponding to the measurement result to the information processing device 22B.

The information processing device 22B transmits AR content data to the AR display device 1B to display the avatar A corresponding to the avatar of the person A.

Furthermore, the information processing device 22B performs various types of recognition processing on the basis of the measurement data supplied from the measurement device 21B to generate a spatiotemporal scene graph representing the context of the space B where the person B is present. The information processing device 22B compares the spatiotemporal scene graph representing the context of the space B with the spatiotemporal scene graphs generated by the processing in the person action learning phase to predict the next action of the person A who is at a remote location. The information processing device 22B reproduces the action of the person A as the action of the avatar A on the basis of the predicted action of the person A and the spatial layout of the space B. The action of the person A is reproduced by displaying the avatar A performing the predicted action.

The information processing device 22A and the information processing device 22B transmit and receive recognition data corresponding to data of their respective recognition results. The information processing device 22A transmits, to the information processing device 22B, recognition data representing the recognition result of the action of the person A, the recognition result of the object-to-object relationship in the space A, and the like. Furthermore, the information processing device 22B transmits, to the information processing device 22A, recognition data representing the recognition result of the action of the person B, the recognition result of the object-to-object relationship in the space B, and the like. The respective contexts of the space A and the space B are shared between the information processing device 22A and the information processing device 22B, and are used in each processing in the person action reproduction phase including the generation of the spatiotemporal scene graph.

The action of the avatar B watched by the person A is controlled on the basis of the action predicted by the information processing device 22A, and the action of the avatar A watched by the person B is controlled on the basis of the action predicted by the information processing device 22B, enabling smooth remote communication with low latency.

In the example illustrated in Fig. 3, the measurement device 11 and the measurement device 21A, and the measurement device 11 and the measurement device 21B are considered devices with different housings, but may be configured as devices with the same housing. In this case, the measurement in the person action learning phase and the measurement in the person action reproduction phase are performed in the same space.

Furthermore, the respective functions of the information processing device 12 and the information processing devices 22A and 22B may be implemented by a server on the Internet. Furthermore, the information processing device 12 and the information processing devices 22A and 22B may be configured as devices with the same housing.

The function of the measurement device 11 and the function of the information processing device 12 may be implemented by a single device. Similarly, on the person action reproduction side, the function of the measurement device 21A and the function of the information processing device 22A, and the function of the measurement device 21B and the function of the information processing device 22B may be implemented by a single device. Furthermore, the function of the information processing device 22A may be implemented in the AR display device 1A, and the function of the information processing device 22B may be implemented in the AR display device 1B.

As described above, it is possible to change, as appropriate, which device implements the function possessed by each device. Hereinafter, unless otherwise distinguished, the measurement device 21A and the measurement device 21B are collectively referred to as a measurement device 21 where appropriate. Furthermore, unless otherwise distinguished, the information processing device 22A and the information processing device 22B are collectively referred to as an information processing device 22.

Details of the processing in each of the person action learning phase and the person action reproduction phase will be described.

### <<Person action learning phase>>

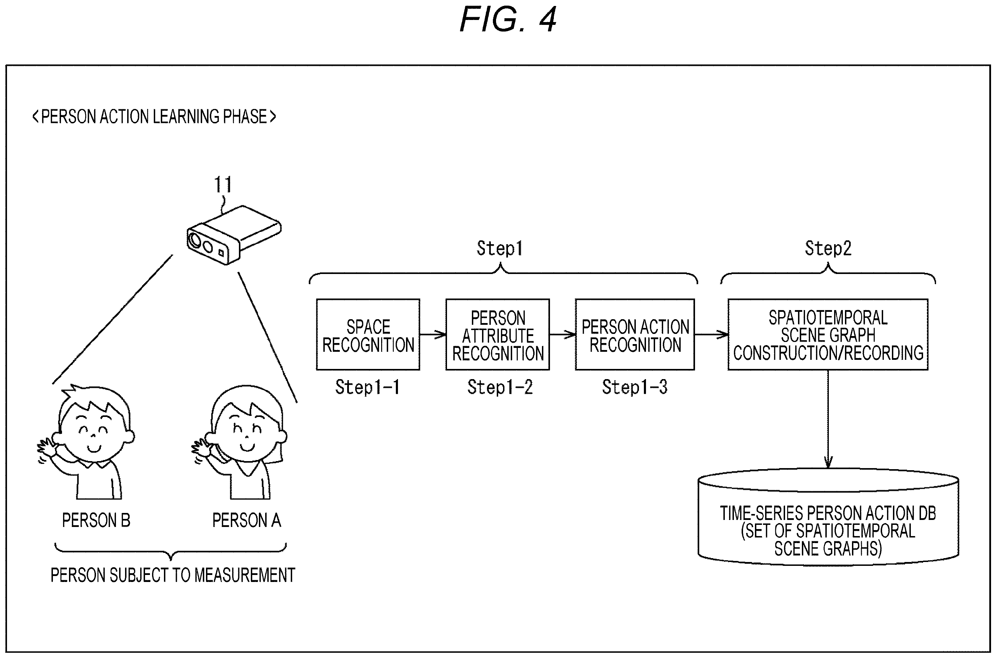

Fig. 4 is a diagram illustrating an example of the processing in the person action learning phase.

The processing in the person action learning phase includes recognition processing (Step 1) and spatiotemporal scene graph construction/recording processing (Step 2).

### <Step 1: Recognition processing>

The recognition processing is processing to recognize the action of a person in the real-world space, attribute information regarding each person, space information, and an object-to-object relationship on the basis of the measurement data supplied from the measurement device 11. The recognition processing includes space recognition processing, person attribute recognition processing, and person action recognition processing as processing of Steps 1-1 to 1-3. The person attribute processing need not necessarily be performed.

### • Step 1-1: Space recognition processing

In the space recognition processing, the space information is generated on the basis of the measurement data supplied from the measurement device 11. For example, the following information is generated as the space information.

- Geometric information regarding each object: shape, size, and the like
- Semantic information regarding each object: category (wall, floor, chair, etc.), part (backrest, doorknob)
- Information indicating object-to-object relationship: object-to-object distance such as "object A is near object B", object-to-object positional relationship such as "object A is in front of object B", and the like

As the space recognition technology, for example, the technologies described in Documents 2 and 3 can be used.

Document 2 "[Narita+, IROS2019] G. Narita, T. Seno, T. Ishikawa and Y. Kaji, "PanopticFusion: Online Volumetric Semantic Mapping at the Level of Stuff and Things", IROS, 2019."

Document 3 "[Tahara+, ISMAR2020] T. Tahara, T. Seno, G. Narita and T. Ishikawa, "Retargetable AR: Context-aware Augmented Reality in Indoor Scenes based on 3D Scene Graph", ISMAR, 2020."

### • Step 1-2: Person attribute recognition processing

In the person attribute recognition processing, the person attribute information is generated on the basis of the measurement data supplied from the measurement device 11. For example, the following information is generated as the person attribute information.

- Information obtained from appearance, such as age, gender, and race
- Personally identifiable information including a combination of the above information and image information

The person attribute can be recognized using, for example, a library such as OpenCV.

### • Step 1-3: Person action recognition processing

In the person action recognition processing, relationship information indicating an object-to-person relationship and relationship information indicating a person-to-person relationship are generated on the basis of the measurement data supplied from the measurement device 11. For example, the following information is generated as the relationship information.

- Object-to-person: a motion where a certain person acts on a certain object, such as a motion where the person A sits on the sofa ("the person A V the object B")
- Person-to-person: a motion performed by a certain person on another person, such as a motion where the person A talks to the person B ("the person A V the person B")

As the person action recognition technology, for example, the technology described in Document 4 can be used.

Document 4 "[Gao+, BMVC2018] C. Gao, Y. Zou and J.-B. Huang, "iCAN: Instance-Centric Attention Network for Human-Object Interaction", BMVC, 2018."

The information processing device 12 is equipped with, for example, recognizers that each perform a corresponding one of the space recognition processing, the person attribute recognition processing, and the person action recognition processing. Each recognizer includes, for example, an inference model that receives the measurement data supplied from the measurement device 11 and outputs a recognition result. An inference model generated in advance through machine learning is provided in the information processing device 12. Each recognizer obtains the recognition result along with its likelihood.

The space information generated by the space recognition processing, the person attribute information generated by the person attribute recognition processing, and the relationship information generated by the person action recognition processing are each represented as a graph, which is data with a graph structure.

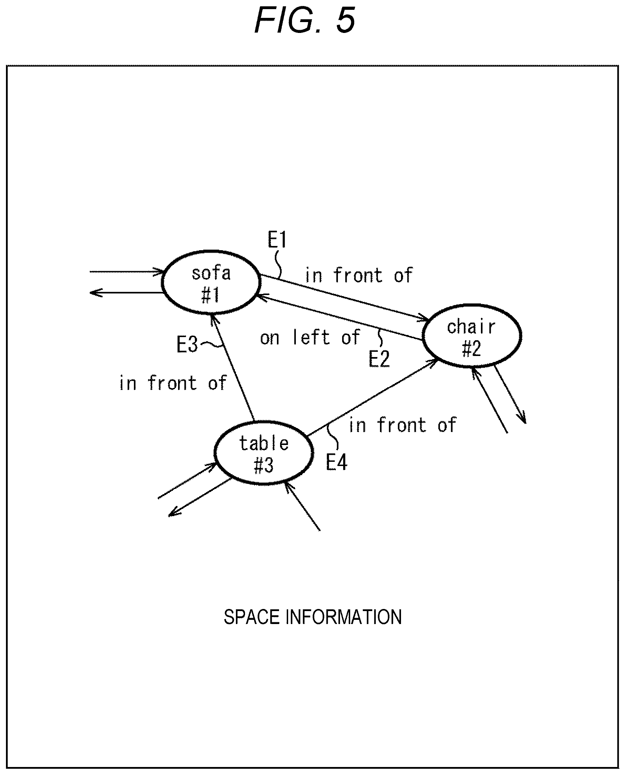

Fig. 5 is a diagram illustrating an example of the graph representing the space information.

For example, it is assumed that a sofa, a chair, and a table are recognized as being present around the person subject to measurement and arranged to have a predetermined positional relationship. In this case, as illustrated in Fig. 5, the graph representing the space information is data including three nodes (sofa #1, chair #2, table #3) representing these objects.

In the example illustrated in Fig. 5, the node of the sofa and the node of the chair are connected by an edge E1 labeled "in front of" and an edge E2 labeled "on left of". The edge E1, represented as the arrow extending from the node of the sofa to the node of the chair, represents that the chair is present in front of the sofa. The edge E2, represented as the arrow extending from the node of the chair to the node of the sofa, represents that the sofa is present on the left side relative to the front of the chair.

The node of the sofa and the node of the table, and the node of the chair and the node of the table are similarly connected by edges E3 and E4, respectively, the edges E3 and E4 being labeled to represent their respective positional relationships.

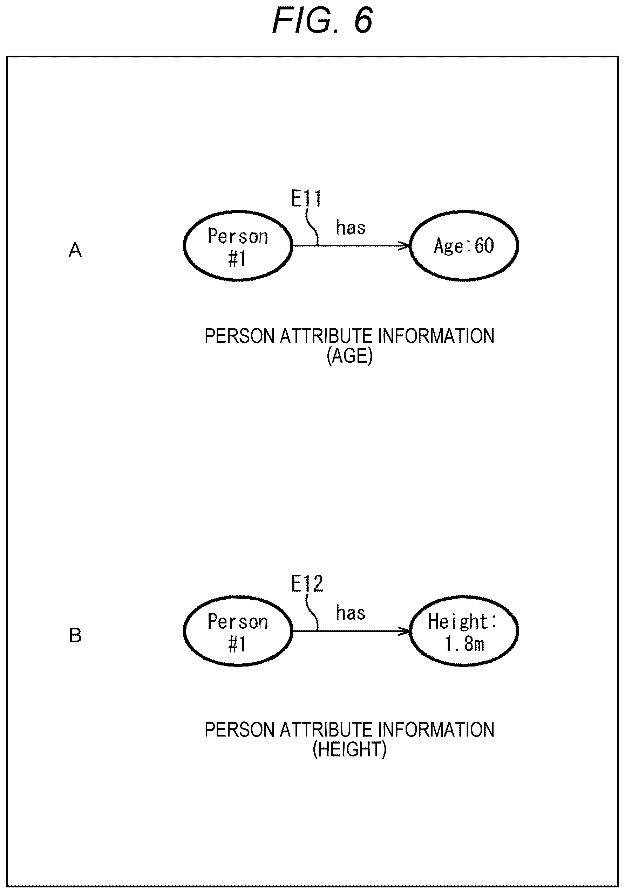

Fig. 6 is a diagram illustrating an example of the graph representing the person attribute information.

In a case where the age of the person subject to measurement is recognized as 60 years old, the graph representing the person attribute information includes a node representing the person subject to measurement (Person #1) and a node representing that the age is 60 years old (Age: 60) as illustrated in A of Fig. 6. The node representing the person subject to measurement and the node representing that the age is 60 years old are connected by an edge E11 labeled "has".

Furthermore, in a case where the height of the person subject to measurement is recognized as 1.8 meters, the graph representing the person attribute information includes a node representing the person subject to measurement (Person #1) and a node representing that the height is 1.8 meters (Height: 1.8 meters) as illustrated in B of Fig. 6. The node representing the person subject to measurement and the node representing that the height is 1.8 meters are connected by an edge E12 labeled "has".

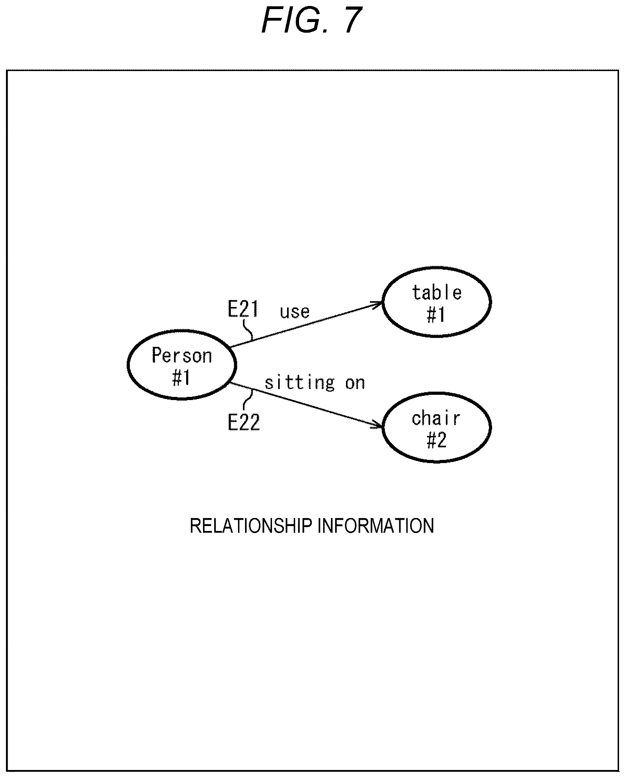

Fig. 7 is a diagram illustrating an example of the graph representing the relationship information.

It is assumed that, as an object-to-person relationship, the person subject to measurement is recognized as using the table and sitting on the chair. In this case, as illustrated in Fig. 7, the graph representing the relationship information includes a node representing the person subject to measurement (Person #1), a node representing the table (table #1), and a node representing the chair (chair #2).

The node representing the person subject to measurement and the node representing the table are connected by an edge E21 labeled "use". Furthermore, the node representing the person subject to measurement and the node representing the chair are connected by an edge E22 labeled "sitting on".

As described above, the result of the recognition processing in Step 1 is obtained as data with a graph structure in which objects, a person, and person attributes are represented as nodes and their relationships are represented as edges.

### <Step 2: Spatiotemporal scene graph construction/recording processing>

The spatiotemporal scene graph construction/recording processing is processing to construct and record a space scene graph representing spatial semantics at each time and a spatiotemporal scene graph including information regarding changes between space scene graphs on the basis of the information obtained through the recognition processing.

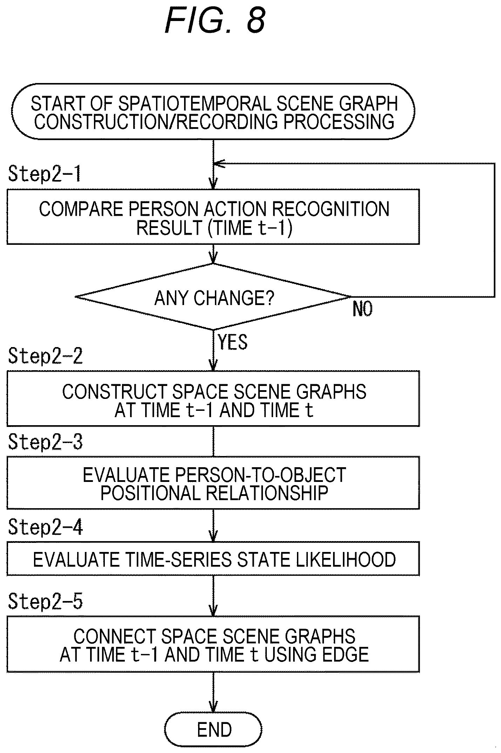

Fig. 8 is a flowchart for describing the spatiotemporal scene graph construction/recording processing.

### • Step 2-1: Comparison of person action recognition results

A person action recognition result obtained from each recognizer at time t that is the current time is compared with a person action recognition result obtained similarly at time t-1 that is the previous measurement time, and the presence or absence of a change in person action is determined. In a case where it is determined that there is no change in person action, the comparison of person action recognition results is repeatedly performed on the basis of information newly obtained through the recognition processing.

On the other hand, in a case where it is determined that there is a change in person action, the processing proceeds to the next stage to construct the spatiotemporal scene graph.

### • Step 2-2: Construction of space scene graphs at time t-1/time t

In a case where a change in person action is detected, space scene graphs at time t-1 when the latest change in person action is detected and time t that is the current time are constructed. The space scene graphs are constructed by integrating the graph representing the space information, the graph representing the person attribute information, and the graph representing the object-to-person relationship information at each time into a single scene graph for each time.

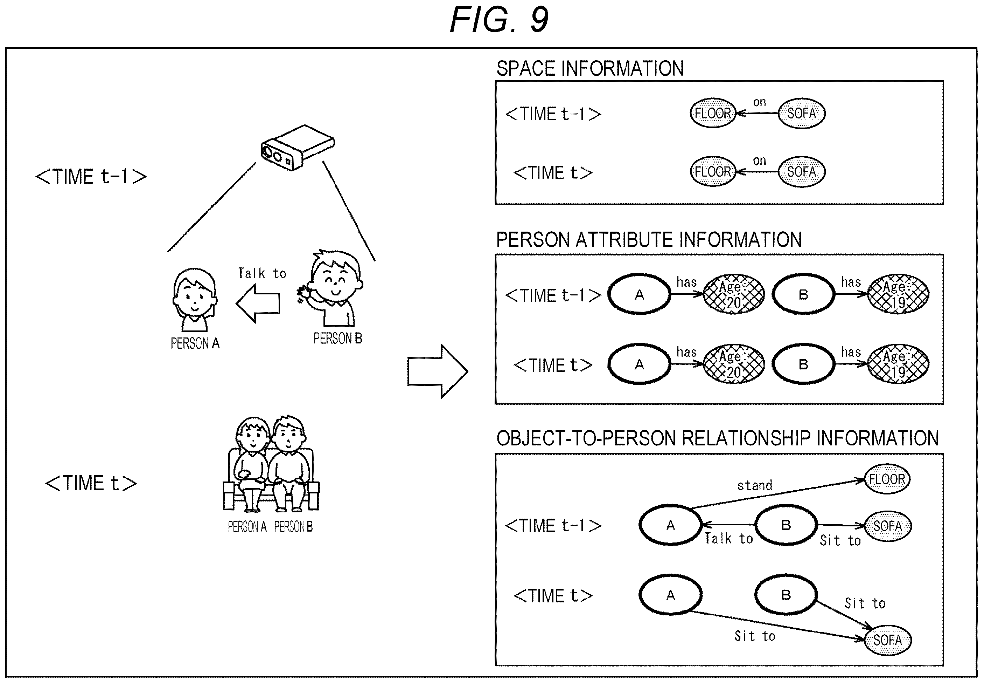

Fig. 9 is a diagram illustrating an example of the graph representing the recognition result.

As illustrated on the left side of Fig. 9, it is assumed that at time t-1, the person B who is sitting on the sofa is recognized as talking to the person A, and that at time t after a predetermined period, the person A is recognized as sitting on the same sofa as the person B. In this case, the graphs representing the space information, the graphs representing the person attribute information, and the graphs representing the object-to-person relationship information at time t-1 and time t are the graphs illustrated on the right side of Fig. 9.

For example, the graph representing the space information at time t-1 includes the node of the floor and the node of the sofa as objects. The node of the sofa and the node of the floor are connected by an edge labeled "on" representing that the sofa is on the floor. For example, the graph representing the space information at time t also includes the node of the floor and the node of the sofa as objects.

Furthermore, the graph representing the person attribute information at time t-1 includes a graph in which the node of the person A and a node representing that the age is 20 years old (Age: 20) are connected by an edge labeled "has", and a graph in which the node of the person B and a node representing that the age is 19 years old (Age: 19) are connected by an edge labeled "has". The graph representing the person attribute information at time t also includes graphs having the same structure.

The graph representing the object-to-person relationship information at time t-1 includes a graph in which the node of the person A and the node of the floor are connected by an edge labeled "stand", and the node of the person A and the node of the person B are connected by an edge labeled "Talk to" and extending from the node of the person B to the node of the person A. The edge labeled "Talk to" and extending from the node of the person B to the node of the person A represents that the person B has talked to the person A.

In a case where a plurality of persons is present in the space subject to measurement, the object-to-person relationship information includes not only information indicating the object-to-person relationship but also information indicating the person-to-person relationship. As appropriate, the object-to-person relationship information further includes information indicating an object-to-object relationship.

The graph representing the relationship information at time t-1 further includes a graph in which the node of the person B and the node of the sofa are connected by an edge labeled "Sit to". The edge labeled "Sit to" and extending from the node of the person B to the node of the sofa represents that the person B is sitting on the sofa.

The graph representing the object-to-person relationship information at time t includes a graph in which the node of the person A and the node of the sofa are connected by an edge labeled "Sit to". The edge labeled "Sit to" and extending from the node of the person A to the node of the sofa represents that the person A is sitting on the sofa.

That is, Fig. 9 illustrates an example of a case where it is determined that a change has occurred in person action on the basis of a change in the graph representing the object-to-person relationship information in response to the person A sitting on the sofa. As described above, in a case where the change is detected between the graph representing the recognition result at time t-1 and the graph representing the recognition result at time t, the graphs are integrated into a space scene graph.

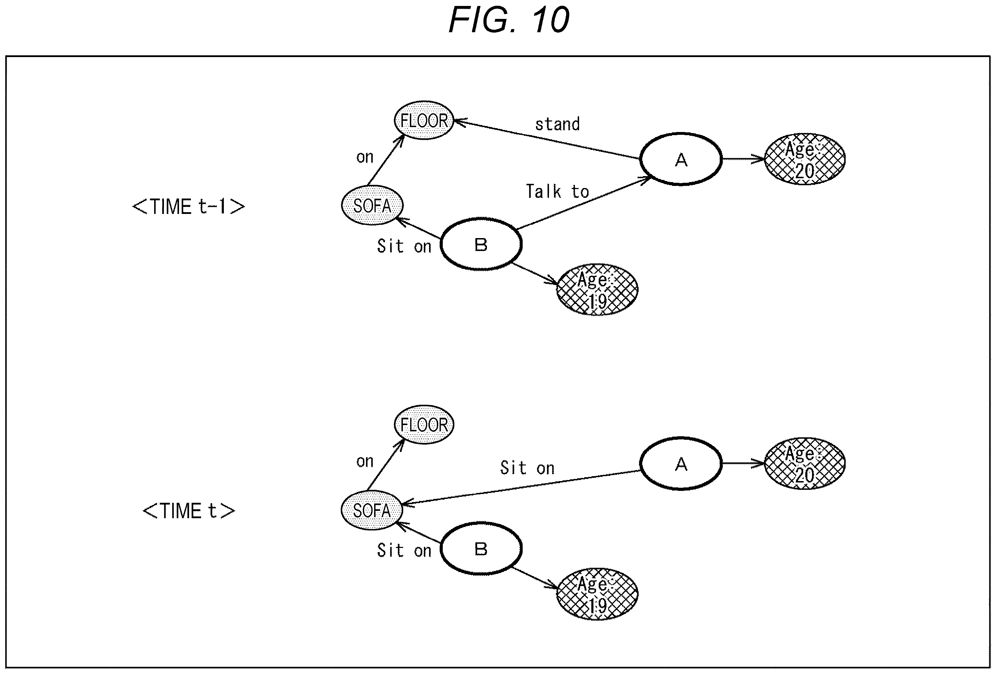

Fig. 10 is a diagram illustrating an example of the space scene graph.

The graph illustrated in the upper part of Fig. 10 is a space scene graph obtained by integrating the respective graphs representing the space information, the person attribute information, and the relationship information at time t-1. Furthermore, the graph illustrated in the lower part of Fig. 10 is a space scene graph obtained by integrating the respective graphs representing the space information, the person attribute information, and the relationship information at time t.

### • Step 2-3: Evaluation of person-to-object positional relationship

The person-to-object positional relationship from time t-1 to time t is evaluated. This evaluation uses a metric that can be instantly calculated from the positions of each person and each object. For example, in a case where a change in the positional relationship representing "Close to" is recognized, it is evaluated that the distance between the person and the object has decreased from time t-1 to time t. Such a change in the positional relationship is represented by an edge connecting the node of the person and the node of the object.

A similar metric is used in the person action reproduction phase as well. To enable the action prediction to be performed in a short time in the person action reproduction phase, it is desirable that the evaluation of the positional relationship be performed here using a metric that can be calculated in a short time.

### • Step 2-4: Evaluation of time-series state likelihood

How the likelihood of the person action recognition result has changed from time t-1 to time t is evaluated using time-series data. In the person action recognition, in a case where an action with a significantly high probability (likelihood) is performed among discrete actions, the action with a high probability is output as the person action recognition result. For example, in a case where an action with a likelihood greater than or equal to a threshold is recognized, the action is output as the person action recognition result.

In a case where a person changes their action, the time from the action before the change until the recognition of the action with a significantly high likelihood serves as a factor causing the communication discrepancy described above. By recording temporal changes in the likelihood of the recognition result of each action obtained through the person action recognition processing, it is possible to easily predict the next action of the target person in a case where a similar change in likelihood is observed.

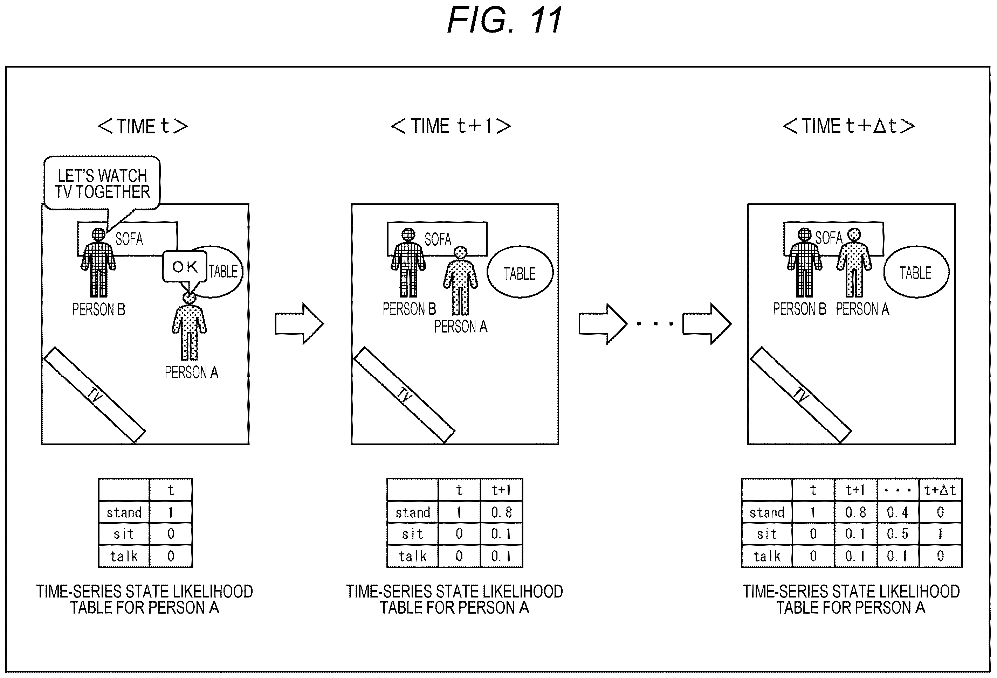

Fig. 11 is a diagram illustrating an example of the time-series state likelihood.

The left side of Fig. 11 illustrates the states of the persons A and B at time t. The left side of Fig. 11 illustrates a state in which the person B sitting on the sofa suggests that the person A standing near the table sits on the sofa and watches TV together. In the time-series state likelihood table for the person A, "1", "0", and "0" are recorded as the likelihoods of "stand", "sit", and "talk", respectively. As the action recognition result of the person A, "stand" with a likelihood greater than the threshold is output.

The center of Fig. 11 illustrates the states of the persons A and B at time t+1. The center of Fig. 11 illustrates a state in which the person A starts moving from the standing position and is approaching the sofa. In the time-series state likelihood table for the person A, "0.8", "0.1", and "0.1" are recorded as the likelihoods of "stand", "sit", and "talk", respectively. As the person A has approached the person B and the sofa, recognition is performed such that the likelihoods of "sit" and "talk" increase, while the likelihood of "stand" decreases.

The right side of Fig. 11 illustrates the states of the persons A and B at time t+Δt. The right side of Fig. 11 illustrates a state immediately after the person A sits on the sofa. In this case, in the time-series state likelihood table for the person A, "0", "1", and "0" are recorded as the likelihoods of "stand", "sit", and "talk", respectively. As the action recognition result of the person A, "sit" with a likelihood greater than the threshold is output.

As described above, the likelihood of the action recognition result at each time is recorded in the time-series state likelihood table. The information recorded in the time-series state likelihood table is, for example, a time series of likelihoods until an action with a likelihood greater than the threshold is recognized next.

### • Step 2-5: Edge connection between space scene graphs at time t-1/time t

By connecting the space scene graphs constructed in Step 2-2 using the edge representing the change in the positional relationship evaluated in Step 2-3 and the edge representing the time-series state likelihood evaluated in Step 2-4, the space scene graphs at each time are integrated into a single spatiotemporal scene graph.

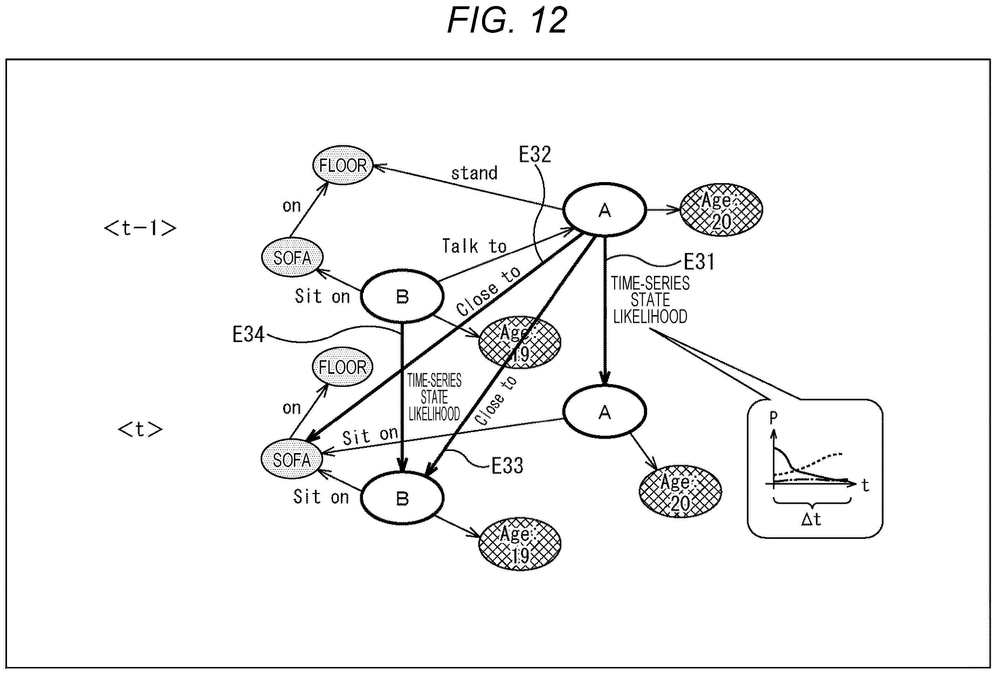

Fig. 12 is a diagram illustrating an example of the spatiotemporal scene graph.

The spatiotemporal scene graph illustrated in Fig. 12 is a scene graph obtained by connecting the space scene graph at time t-1 and the space scene graph at time t described with reference to Fig. 10 using the edge representing a change in the positional relationship and the edge representing the time-series state likelihood. The edge representing a change in positional relationship is referred to as a positional relationship edge, and the edge representing the time-series state likelihood is referred to as a time-series state likelihood edge.

The node of the person A in the space scene graph at time t-1 and the node of the person A in the space scene graph at time t are connected by a time-series state likelihood edge E31 representing the time-series state likelihood of the person A from time t-1 to time t. As illustrated in the balloon, the label assigned to the time-series state likelihood edge E31 represents the respective time series of likelihoods of "stand", "sit", and "talk".

Furthermore, the node of the person A in the space scene graph at time t-1 and the node of the sofa in the space scene graph at time t are connected by a positional relationship edge E32 representing that the change in the positional relationship between the person A and the sofa from time t-1 to time t is "Close to". The label assigned to the positional relationship edge E32 represents that the person A has approached the sofa.

Furthermore, the node of the person A in the space scene graph at time t-1 and the node of the person B in the space scene graph at time t are connected by a positional relationship edge E33 representing that the change in the positional relationship between the person A and the person B from time t-1 to time t is "Close to". The label assigned to the positional relationship edge E33 represents that the person A has approached the person B.

Similarly, the node of the person B in the space scene graph at time t-1 and the node of the person B in the space scene graph at time t are connected by a time-series state likelihood edge E34 representing the time-series state likelihood of the person B from time t-1 to time t.

As described above, the spatiotemporal scene graph is obtained by connecting the nodes of the same person in the space scene graphs at different times using the time-series state likelihood edge representing a time-series state likelihood. Furthermore, the spatiotemporal scene graph is obtained by connecting the nodes of each person and each object and the nodes of each person and the other person in the space scene graphs at different times using the positional relationship edge representing a change in positional relationship.

The time-series state likelihood edge corresponds to an edge representing a time series of likelihood of the action recognition result, that is, an edge representing temporal changes in state of the person action recognition result. Furthermore, the positional relationship edge corresponds to an edge representing a change in object-to-object positional relationship, that is, an edge representing temporal changes in arrangement state of objects in a space. The space scene graph is a scene graph obtained by connecting nodes constituting space scene graphs at different times using two types of change edges representing temporal changes in state.

In the example illustrated in Fig. 12, a single spatiotemporal scene graph is generated by integrating the space scene graphs for two times: t-1 and t; alternatively, the single spatiotemporal scene graph may be generated by integrating space scene graphs for three or more times.

The spatiotemporal scene graph generated in advance by integrating a plurality of space scene graphs as described above is recorded in the time-series person action DB and used in prediction of the next person action in the person action reproduction phase. In the present disclosure, the plurality of scene graphs recorded in advance in the time-series person action DB may be referred to as second scene graphs.

As described above, in the spatiotemporal scene graph construction/recording processing, the spatiotemporal scene graph is constructed and recorded upon a semantic change in the context of the real-world space. The timing when a semantic change in the context of the real-world space occurs includes the timing when a change in positional relationship between objects including persons and surrounding objects occurs. Necessary data is recorded in the time-series person action DB, regardless of measurement duration or temporal resolution, enabling efficient generation of the time-series person action DB.

Furthermore, the information recorded in the time-series person action DB is information with a graph structure. It is possible to access data by traversing the node of interest and its connected edge, which allows a reduction in access frequency and an increase in processing efficiency, compared to DBs where information in table format is recorded.

### <<Person action reproduction phase>>

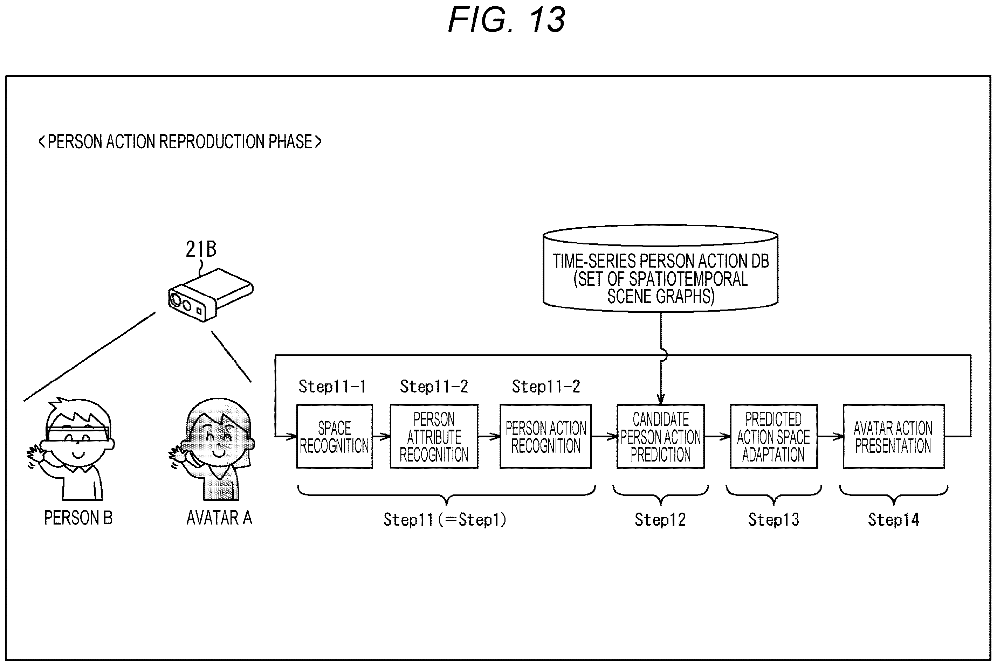

Fig. 13 is a diagram illustrating an example of the processing in the person action reproduction phase.

The processing in the person action reproduction phase is processing to sequentially predict the next action of a remote person by referring to the spatiotemporal scene graphs recorded in the time-series person action DB through the processing in the person action learning phase, and display the avatar of the remote person on the basis of a predicted action, which is an action obtained through prediction. The information processing device 22A performs processing to display the avatar of the person B, and the information processing device 22B performs processing to display the avatar of the person A.

The processing in the person action reproduction phase includes recognition processing (Step 11), candidate person action prediction processing (Step 12), predicted action space adaptation processing (Step 13), and avatar action presentation processing (Step 14).

### <Step 11: Recognition processing>

The recognition processing in the person action reproduction phase is basically similar to the recognition processing (Step 1 in Fig. 4) in the person action learning phase. Redundant descriptions will be omitted as appropriate. The recognition processing in the person action reproduction phase is performed with a space containing a person communicating with a remote person as a measurement target.

### • Step 11-1: Space recognition processing

In the space recognition processing, space information is generated on the basis of the measurement data supplied from the measurement device 21. As the space information, geometric information regarding each object, semantic information regarding each object, and information indicating an object-to-object relationship are generated.

### • Step 11-2: Person attribute recognition processing

In the person attribute recognition processing, person attribute information regarding the person subject to measurement is generated on the basis of the measurement data supplied from the measurement device 21. As the person attribute information, information such as age, gender, and race obtained from the appearance of the person, and personally identifiable information are generated.

### • Step 11-3: Person action recognition processing

In the person action recognition processing, relationship information regarding an object-to-person relationship and a person-to-person relationship are generated on the basis of the measurement data supplied from the measurement device 21.

The space information generated by the space recognition processing, the person attribute information generated by the person attribute recognition processing, and the relationship information generated by the person action recognition processing are obtained as data with a graph structure.

### <Step 12: Candidate person action prediction processing>

The candidate person action prediction processing is processing to retrieve a similar spatiotemporal scene graph, which is a spatiotemporal scene graph similar to the spatiotemporal scene graph at the current time, from among the spatiotemporal scene graphs recorded in the time-series person action DB and obtain a candidate next action of the remote person. In the present disclosure, the similar spatiotemporal scene graph may be simply referred to as a similar scene graph.

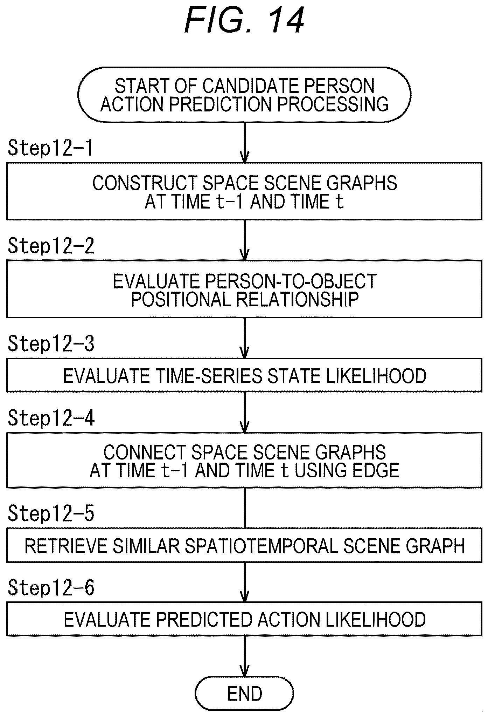

The candidate person action prediction processing will be described with reference to the flowchart in Fig. 14.

### • Step 12-1: Construction of space scene graphs at time t-1/time t

Similar to Step 2-2 in Fig. 8, the space scene graphs at time t-1 and time t are constructed.

### • Step 12-2: Evaluation of person-to-object positional relationship

Similar to Step 2-3 in Fig. 8, the person-to-object positional relationship from time t-1 to time t is evaluated.

### • Step 12-3: Evaluation of time-series state likelihood

Similar to Step 2-4 in Fig. 8, how the likelihood of the person action recognition result has changed from time t-1 to time t is evaluated using time-series data.

### • Step 12-4: Edge connection between space scene graphs at time t-1/time t

Similar to Step 2-5 in Fig. 8, by connecting the space scene graphs constructed in Step 12-1 using the edge representing the change in the positional relationship evaluated in Step 12-2 and the edge representing the time-series state likelihood evaluated in Step 12-3, the space scene graphs at each time are integrated into a single spatiotemporal scene graph.

As described above, the processing in Steps 12-1 to 12-4 in Fig. 14 is similar to the processing in Steps 2-2 to 2-5 in Fig. 8 in the person action learning phase. A spatiotemporal scene graph representing the context of a space containing a person communicating with a remote person via an avatar is generated. In the present disclosure, a spatiotemporal scene graph obtained by connecting the nodes in the space scene graphs at time t-1/time t, which are different times, using the edge representing a change in positional relationship and the edge representing a time-series state likelihood may be referred to as a first scene graph.

### • Step 12-5: Retrieval of similar spatiotemporal scene graph

The similar spatiotemporal scene graph is retrieved by comparing the current spatiotemporal scene graph from time t-1 to time t constructed by the processing up to Step 12-4 with the spatiotemporal scene graphs recorded in the time-series person action DB. The similar spatiotemporal scene graph is retrieved, for example, by comparing graph-to-graph distances of each spatiotemporal scene graph and enumerating spatiotemporal scene graphs with the graph-to-graph distance less than or equal to a threshold.

In a case where the person subject to measurement during the construction of the spatiotemporal scene graphs recorded in the time-series person action DB is different from the person targeted for the current spatiotemporal scene graph, the graph-to-graph distances are compared after each person targeted by the current spatiotemporal scene graph is assigned to the person subject to measurement during the construction of the spatiotemporal scene graphs recorded in the time-series person action DB.

Furthermore, in a case where the identity of time-series state likelihood edges is evaluated in the similar spatiotemporal scene graph retrieval, for example, when the mean cross-correlation between the time-series state likelihoods represented by both edges subject to evaluation is greater than or equal to a threshold, it is determined that both edges are identical.

As the graph-to-graph distance, various metrics such as an edit distance can be used. The edit distance between spatiotemporal scene graphs is a metric used to evaluate, as the graph-to-graph distance, how many edits of nodes and edges are required for the two graphs subject to comparison to become identical. The edits of nodes and edges include addition, deletion, and substitution of nodes and edges.

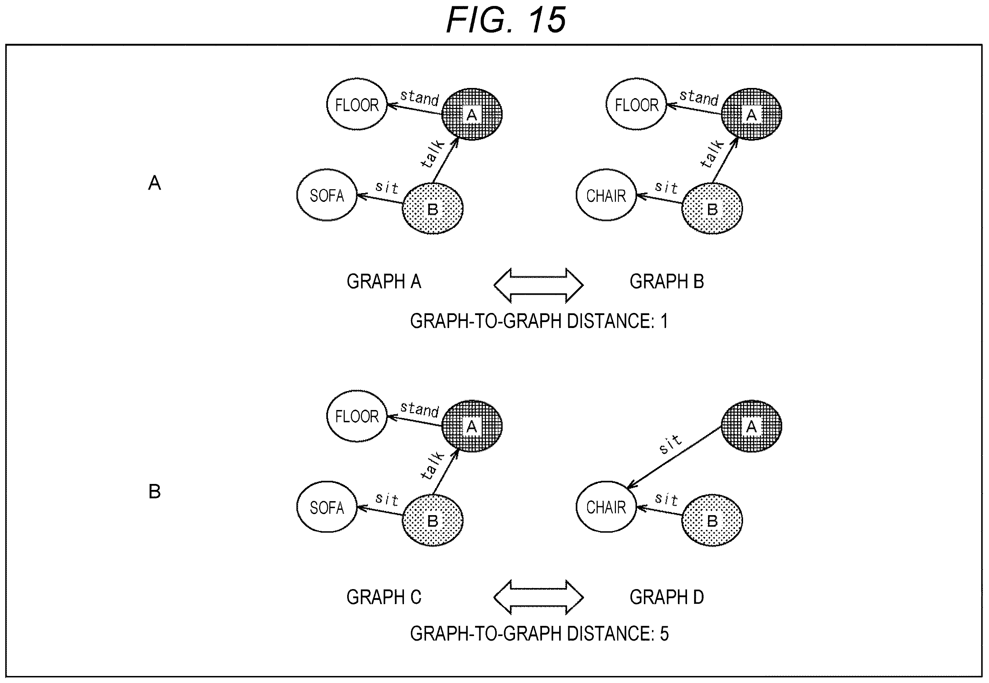

Fig. 15 is a diagram illustrating an example of the graph-to-graph distance.

A graph A illustrated in A of Fig. 15 includes the nodes of the person A, the person B, the floor, and the sofa. The node of the person A and the node of the person B are connected by an edge labeled "talk", and the node of the person A and the node of the floor are connected by an edge labeled "stand". The node of the person B and the node of the sofa are connected by an edge labeled "sit".

A graph B subject to comparison with the graph A includes the nodes of the person A, the person B, the floor, and the chair. The node of the person A and the node of the person B are connected by an edge labeled "talk", and the node of the person A and the node of the floor are connected by an edge labeled "stand". The node of the person B and the node of the chair are connected by an edge labeled "sit".

For example, in a case where the graph A is used as a reference, substituting the node of the sofa for the node of the chair in the graph B makes the graph B identical to the graph A. The graph-to-graph distance between the graphs A and B illustrated in A of Fig. 15 is 1.

The graph-to-graph distance between the graphs C and D illustrated in B of Fig. 15 is similarly obtained as 5. The graph A and the graph B having a smaller graph-to-graph distance are more similar to each other than the graph C and the graph D are.

On the basis of the graph-to-graph distance obtained as described above, a plurality of similar spatiotemporal scene graphs is retrieved as the spatiotemporal scene graphs including candidate predicted actions. From among the spatiotemporal scene graphs recorded in the time-series person action DB, spatiotemporal scene graphs with at least part of the graph structure similar to that of the current spatiotemporal scene graph are retrieved as similar spatiotemporal scene graphs.

### • Step 12-6: Evaluation of predicted action likelihood

The predicted action to be reproduced by the avatar is selected on the basis of the plurality of similar spatiotemporal scene graphs retrieved in Step 12-5. The predicted action selection is performed to ensure that the action most likely to be performed next by the remote person is selected.

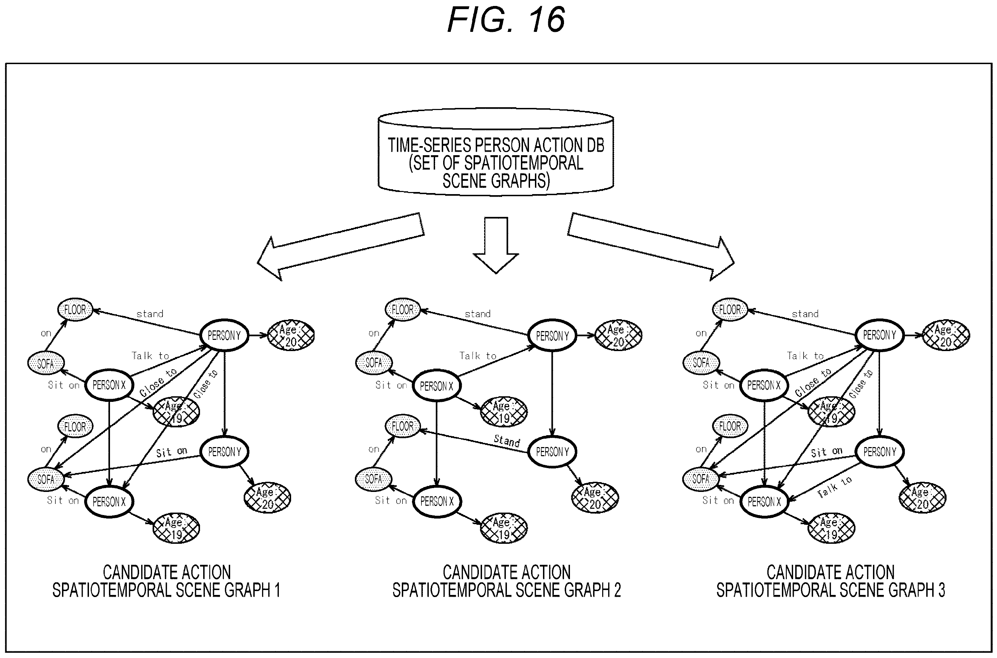

Fig. 16 is a diagram illustrating an example of the spatiotemporal scene graph including candidate predicted actions.

In the example illustrated in Fig. 16, three spatiotemporal scene graphs: candidate action spatiotemporal scene graphs 1 to 3, are retrieved from the time-series person action DB as similar spatiotemporal scene graphs including candidate predicted actions. The candidate action spatiotemporal scene graphs 1 to 3 are spatiotemporal scene graphs including space scene graphs at time t-1 and at time t for persons X and Y.

When attention is paid to the candidate action spatiotemporal scene graphs 1 to 3 in a state where the person B is assigned to the person X and the person A is assigned to the person Y, the candidate predicted actions that the person Y performs next (time t) include "sit on the sofa" and "stand on the floor".

The candidate action spatiotemporal scene graph 1 and the candidate action spatiotemporal scene graph 3 illustrated in Fig. 16 represent that the person Y standing on the floor approaches the sofa at time t-1 and sits on the sofa at time t. The candidate action spatiotemporal scene graph 2 represents that the person Y standing on the floor at time t-1 remains standing on the floor even at time t. The probability (likelihood: 2/3) that the person Y sits on the sofa at time t is higher than the probability (likelihood: 1/3) that the person Y remains standing on the floor at time t. The action most likely to be performed by the person Y standing on the floor at time t-1 is identified as "sit on the sofa".

As described above, from among the candidate predicted actions, "sit on the sofa" that is the candidate with the highest probability is selected as the final predicted action to be reproduced by the avatar. The action "sit on the sofa" is an action that achieves a change in the state represented by the time-series state likelihood edge connected to the node of the person Y corresponding to the person A at time t-1 in the candidate action spatiotemporal scene graphs 1 and 2 that are similar spatiotemporal scene graphs.

Furthermore, "sofa" is selected as the next destination. The destination "sofa" is a destination represented by the positional relationship edge "Close to" connected to the node of the person Y corresponding to the person A in the candidate action spatiotemporal scene graphs 1 and 2 that are similar spatiotemporal scene graphs.

Moreover, time Tgoal required to complete the action "sit on the sofa" is obtained. The time Tgoal is obtained, for example, as a difference between time t-1 and time t in the candidate action spatiotemporal scene graph 1 and the candidate action spatiotemporal scene graph 3 that are used in the selection of the action "sit on the sofa".

### <Step 13: Predicted action space adaptation processing>

The predicted action space adaptation processing is processing to adjust the action speed of the avatar of the remote person or correct the destination to ensure that the predicted action selected by the candidate person action prediction processing in Step 12 is completed by the time Tgoal.

The action speed adjustment includes movement speed adjustment and motion speed adjustment. Adjustment of the avatar's action speed and correction of the avatar's destination are performed on the basis of the destination based on the predicted action and the time Tgoal required to complete the predicted action. In a case where the predicted action is an action involving movement, the destination is corrected as appropriate.

The space targeted in the person action learning phase and the reproduced space subject to the person action reproduction phase may be different in layout. For example, even in a case where the same action "sit on the sofa" is reproduced by the avatar, the time required to sit on the sofa varies in a manner that depends on the spatial layout. The adjustment of the avatar's action speed and the like are performed according to the difference in layout between the reproduced space and the space subject to measurement during the construction of the spatiotemporal scene graphs (spatiotemporal scene graphs in the time-series person action DB) that are used in the selection of the predicted action.

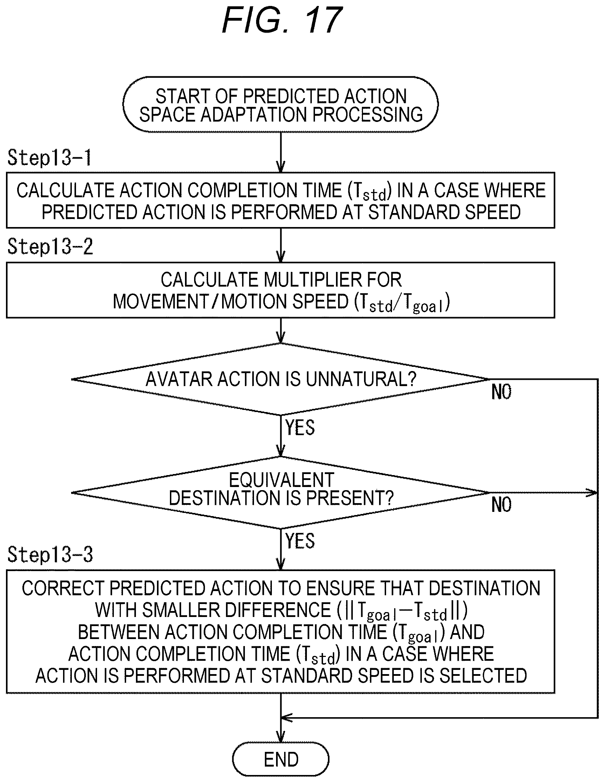

With reference to the flowchart in Fig. 17, the predicted action space adaptation processing will be described.

### • Step 13-1: Calculation of required time Tstd

In a case where the predicted action is reproduced at a standard speed in the reproduced space, required time Tstd required to complete the predicted action is calculated. The standard speed at which the avatar performs each action is determined in advance. The required time Tstd varies in a manner that depends on the type of the predicted action, the spatial layout, the position of the avatar at the start of the predicted action, and the like.

### • Step 13-2: Calculation of multiplier Tstd/Tgoal for action speed

The multiplier Tstd/Tgoal for the avatar's action speed is calculated on the basis of the time Tgoal required to complete the predicted action.

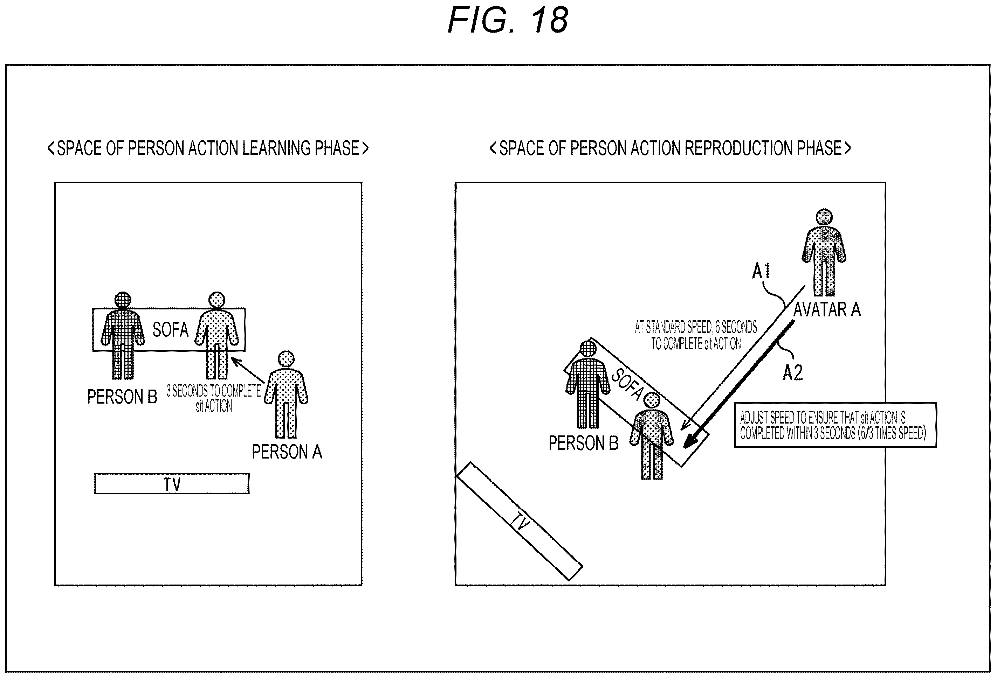

Fig. 18 is a diagram illustrating an example of calculating the multiplier for avatar's action speed.

The space illustrated on the left side of Fig. 18 is a space subject to measurement during the construction of the spatiotemporal scene graphs that are used in the selection of the predicted action (in the person action learning phase), and the space illustrated on the right side is a reproduced space. In the person action learning phase, the time required for the person A to complete the action "sit on the sofa" is recorded as 3 seconds. Therefore, the time Tgoal required to complete the predicted action is 3 seconds.

On the other hand, the sofa in the reproduced space is located away from the position where the avatar A that reproduces the action "sit on the sofa" is standing. In a case where the avatar A reproduces the action "sit on the sofa" at the standard speed as indicated by the arrow A1, the required time Tstd required to complete the predicted action is 6 seconds.

In this case, the multiplier Tstd/Tgoal for the speed of the action "sit on the sofa" is obtained as 2, and the action speed of the avatar A is adjusted to be twice the standard speed as indicated by the arrow A2. By causing the avatar A to perform the action "sit on the sofa", which is the predicted action, at the speed twice the standard speed, it becomes possible to cause the avatar A to sit on the sofa within 3 seconds.

By adjusting the avatar's action speed as described above, it becomes possible to complete the next action within the predicted time.

On the other hand, when the avatar's movement speed or motion speed is increased significantly, the avatar may appear unnatural. In the predicted action space adaptation processing, in a case where the avatar appears unnatural and there is an equivalent destination, the predicted action is corrected to change the destination. For example, a speed threshold below which the avatar does not appear unnatural is set for each action reproduced by the avatar.

### • Step 13-3: Correction of predicted action

In a case where the action selected as the predicted action to be reproduced by the avatar is an action involving movement, a destination such as the sofa or the chair is also selected. In a case where a destination equivalent to the selected destination is present in the reproduced space, and the avatar appears more natural when moving toward the equivalent destination, a change is made to the destination.

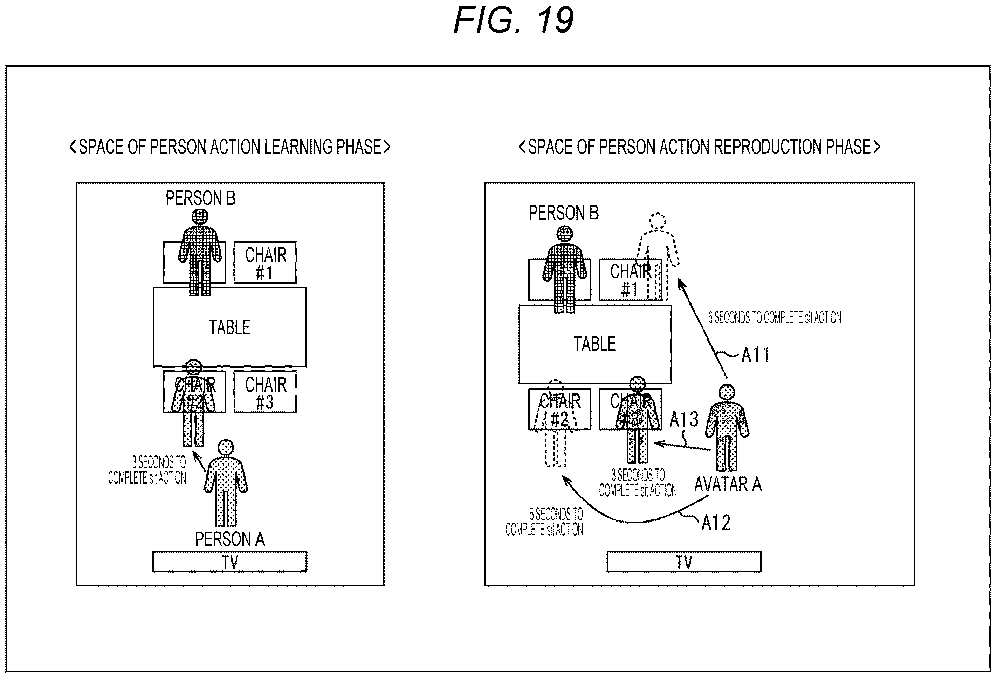

Fig. 19 is a diagram illustrating an example of the destination change.

The space illustrated on the left side of Fig. 19 is a space targeted in the person action learning phase, and the space illustrated on the right side is a reproduced space. In both of the spaces, chairs #1 to #3 are prepared in addition to the chair on which the person B is sitting. The chair #1 is next to the chair on which the person B is sitting, and the chairs #2 and #3 are located on the opposite side of the table from the chair on which the person B is sitting.

In the person action learning phase targeted for the space illustrated on the left side of Fig. 19, a spatiotemporal scene graph including a graph structure representing the action of the person A sitting on the chair #2 is constructed. The chair #2 is located opposite the chair on which the person A is sitting. The time required for the action of sitting on the chair #2 is 3 seconds. On the basis of the spatiotemporal scene graph representing this context, a description will be given of a destination change in a case where the destination is the chair #2 and the action "sit on the chair" is selected as the predicted action.

In a case where the action "sit on the chair" is reproduced by the avatar A, the chairs #1, #2, and #3 are equivalent destinations (nodes) in the spatiotemporal scene graph constructed in the person action reproduction phase targeted for the reproduced space. The spatiotemporal scene graph representing the context of the reproduced space contains a plurality of equivalent destinations. The times required to sit on the chairs #1, #2, and #3 in the reproduced space are 6 seconds, 5 seconds, and 3 seconds, respectively, as indicated by arrows A11 to A13.

As described above, in a case where the reproduced space contains a plurality of equivalent destinations, a difference (∥Tgoal - Tstd∥) between the required time Tgoal required to complete the next action and the time Tstd required for the predicted action to be performed at the standard speed is calculated, and destination correction is performed to ensure that a destination with a smaller difference between the required time Tgoal and the time Tstd is selected. In the example illustrated in Fig. 19, as indicated by the arrow A13, destination correction is performed to ensure that the chair #3 with a smaller difference between the required time Tgoal (3 seconds) and the time Tstd (3 seconds) is selected as the destination.

As described above, selecting the optimal destination on the basis of a change in the appearance of the avatar due to movement can prevent the avatar from appearing unnatural. Such destination correction is performed only within a range where the shape of the spatiotemporal scene graph remains unchanged (range where the semantics represented by the space remain unchanged). For example, a range where a graph including the node of the destination before correction and a graph including the node of the destination after correction have the same shape, and the graph-to-graph distance is zero corresponds to the range where the semantics represented by the space remain unchanged.

### <Step 14: Presentation of avatar action>

The avatar action presentation processing is processing to control the display of the avatar of the remote person to ensure that the predicted action is completed within a predetermined time and reproduce the avatar that performs the predicted action. The action is presented by displaying the image of the avatar that performs the predicted action on the AR display device 1.

Motion generation based on a specific space is described in, for example, Document 4.

Document 4 "[Starke+, SIGGARAPHasia2019] S. Starke, H. Zhang, T. Komura and J. Saito, "Neural State Machine for Character-Scene Interactions", SIGGRAPH Asia, 2019."

After the avatar action presentation processing is performed, processing from Step 11 onward is repeatedly performed.

### <<Summary>>

As described above, the information processing system to which the present technology is applied enables persons located remotely from each other to communicate via their respective avatars.

In the person action learning phase, a space scene graph is generated in which persons and surrounding objects present in the real-world space, and attribute information are set as nodes, and the nodes are connected by edges representing their respective relationships. Furthermore, a spatiotemporal scene graph is constructed by connecting nodes constituting space scene graphs at different times using edges representing temporal changes in state, and then the spatiotemporal scene graph is recorded. The edges representing temporal changes in state include a time-series state likelihood edge representing how the state of a person has changed over time and a positional relationship edge representing how the positional relationship between a person or an object at a certain time and another person or another object at a different time has changed.

In the person action reproduction phase, by comparing a spatiotemporal scene graph formed by space scene graphs from the past to the present with spatiotemporal scene graphs recorded in the time-series person action DB, the action to be performed next by a remote person is predicted. Since an avatar is presented to reproduce the predicted action, it is possible to compensate for latency and achieve smooth communication.

Furthermore, in the person action reproduction phase, the avatar's movement speed or motion speed is adjusted on the basis of the time required to complete the next action in each of the space targeted during the construction of the spatiotemporal scene graph and the reproduced space. This enables the avatar to reproduce the action by the completion time of the predicted next action.

Moreover, in the person action reproduction phase, the avatar's destination or action target is corrected within a range where graphs have the same shape (range where the graph-to-graph distance is zero) to ensure that the avatar reproduces the action by the completion time of the predicted action. This makes it possible to prevent the avatar from appearing unnatural.

With the context of the real-world space represented using the spatiotemporal scene graph in which nodes and edges are spatiotemporally connected, simply by making access while focusing on the edge connected to the node of a specific person or object, it is possible to obtain a change in the state of the specific person or object. Compared to a case where a table-based DB is used, more efficient data access is possible.

The information regarding the spatiotemporal scene graph is information obtained by semantically abstracting the context of the real-world space. The context of the real-world space can be represented with less information. Furthermore, since updates are needed only when a semantic change occurs, it is possible to prevent data bloat.

### <<Configuration of each device>>

### <Configuration of information processing device 12>

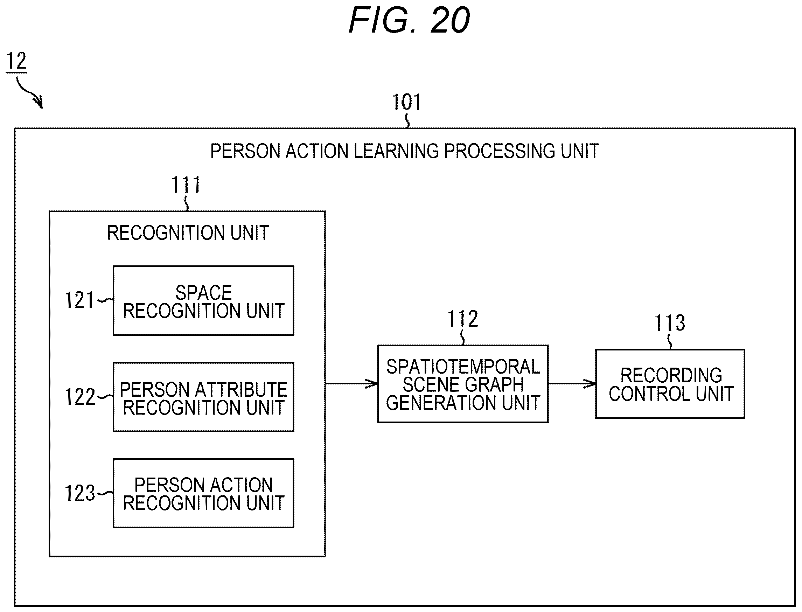

Fig. 20 is a block diagram illustrating a functional configuration example of the information processing device 12. At least some of the functional units illustrated in Fig. 20 are implemented by executing a predetermined program on a CPU of a computer constituting the information processing device 12.

As illustrated in Fig. 20, a person action learning processing unit 101 is implemented in the information processing device 12. The person action learning processing unit 101 includes a recognition unit 111, a spatiotemporal scene graph generation unit 112, and a recording control unit 113.

The recognition unit 111 includes a space recognition unit 121, a person attribute recognition unit 122, and a person action recognition unit 123.

The space recognition unit 121 performs the space recognition processing (Step 1-1 in Fig. 4) on the basis of the measurement data supplied from the measurement device 11 to generate space information.

The person attribute recognition unit 122 performs the person attribute recognition processing (Step 1-2 in Fig. 4) on the basis of the measurement data supplied from the measurement device 11 to generate person attribute information.

The person action recognition unit 123 performs the person action recognition processing (Step 1-3 in Fig. 4) on the basis of the measurement data supplied from the measurement device 11 to generate relationship information. The person action recognition unit 123 functions as a recognition unit that recognizes the state of a person subject to measurement.

The space information generated by the space recognition unit 121, the person attribute information generated by the person attribute recognition unit 122, and the relationship information generated by the person action recognition unit 123 are supplied to the spatiotemporal scene graph generation unit 112.

The spatiotemporal scene graph generation unit 112 performs the spatiotemporal scene graph construction/recording processing (Step 2 in Fig. 4 and Fig. 8) on the basis of the information supplied from each unit of the recognition unit 111. Information regarding the spatiotemporal scene graph generated by the spatiotemporal scene graph generation unit 112 is supplied to the recording control unit 113. The spatiotemporal scene graph generation unit 112 functions as a generation unit that generates a plurality of spatiotemporal scene graphs by performing the spatiotemporal scene graph construction/recording processing.

The recording control unit 113 records the spatiotemporal scene graph supplied from the spatiotemporal scene graph generation unit 112 in the time-series person action DB.

### <Configuration of information processing device 22>

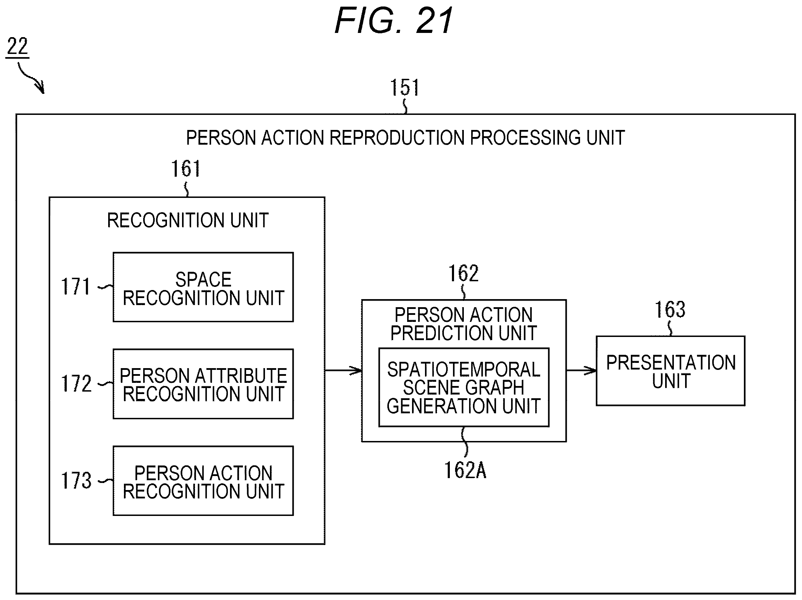

Fig. 21 is a block diagram illustrating a functional configuration example of the information processing device 22. At least some of the functional units illustrated in Fig. 21 are implemented by executing a predetermined program on a CPU of a computer constituting the information processing device 22.

As illustrated in Fig. 21, a person action reproduction processing unit 151 is implemented in the information processing device 22. The person action reproduction processing unit 151 includes a recognition unit 161, a person action prediction unit 162, and a presentation unit 163.

The recognition unit 161 includes a space recognition unit 171, a person attribute recognition unit 172, and a person action recognition unit 173.

The space recognition unit 171 performs the space recognition processing (Step 11-1 in Fig. 13) on the basis of the measurement data supplied from the measurement device 21 to generate space information.

The person attribute recognition unit 172 performs the person attribute recognition processing (Step 11-2 in Fig. 13) on the basis of the measurement data supplied from the measurement device 21 to generate person attribute information.

The person action recognition unit 173 performs the person action recognition processing (Step 11-3 in Fig. 13) on the basis of the measurement data supplied from the measurement device 21 to generate relationship information. The person action recognition unit 173 functions as a recognition unit that recognizes the action of a person A (first person) watching an avatar B (second avatar) that reproduces an action corresponding to the action of a person B (second person) and the action of the person B watching an avatar A (first avatar) that reproduces an action corresponding to the action of the person A.

The space information generated by the space recognition unit 171, the person attribute information generated by the person attribute recognition unit 172, and the relationship information generated by the person action recognition unit 173 are supplied to the person action prediction unit 162.

The person action prediction unit 162 performs the candidate person action prediction processing (Step 12 in Fig. 13 and Fig. 14) on the basis of the information supplied from each unit of the recognition unit 161.

The person action prediction unit 162 includes a spatiotemporal scene graph generation unit 162A. The spatiotemporal scene graph generation unit 162A generates a spatiotemporal scene graph representing the context of a reproduced space on the basis of the information supplied from the recognition unit 161.

The person action prediction unit 162 compares the spatiotemporal scene graph generated by the spatiotemporal scene graph generation unit 162A with the spatiotemporal scene graphs recorded in the time-series person action DB and retrieves similar spatiotemporal scene graphs. The person action prediction unit 162 selects candidate predicted actions on the basis of the similar spatiotemporal scene graphs and selects a predetermined predicted action from among the candidate predicted actions as the final predicted action. Information regarding the predicted action selected by the person action prediction unit 162 is supplied to the presentation unit 163. As described above, the person action prediction unit 162 functions as an information processing unit that selects a predicted action on the basis of similar spatiotemporal scene graphs (similar scene graphs) included in the plurality of scene graphs (second scene graphs) recorded in advance in the time-series person action DB.

The presentation unit 163 reproduces AR content and performs rendering to generate display data for the avatar of a remote person. The presentation unit 163 transmits the display data to the AR display device 1 and causes the AR display device 1 to display the avatar. The presentation unit 163 performs the avatar action presentation processing (Step 14 in Fig. 13). The presentation unit 163 performs the predicted action space adaptation processing (Step 13 in Fig. 13 and Fig. 17) where appropriate.

### <<Modifications>>

### <Configuration example of information processing system>

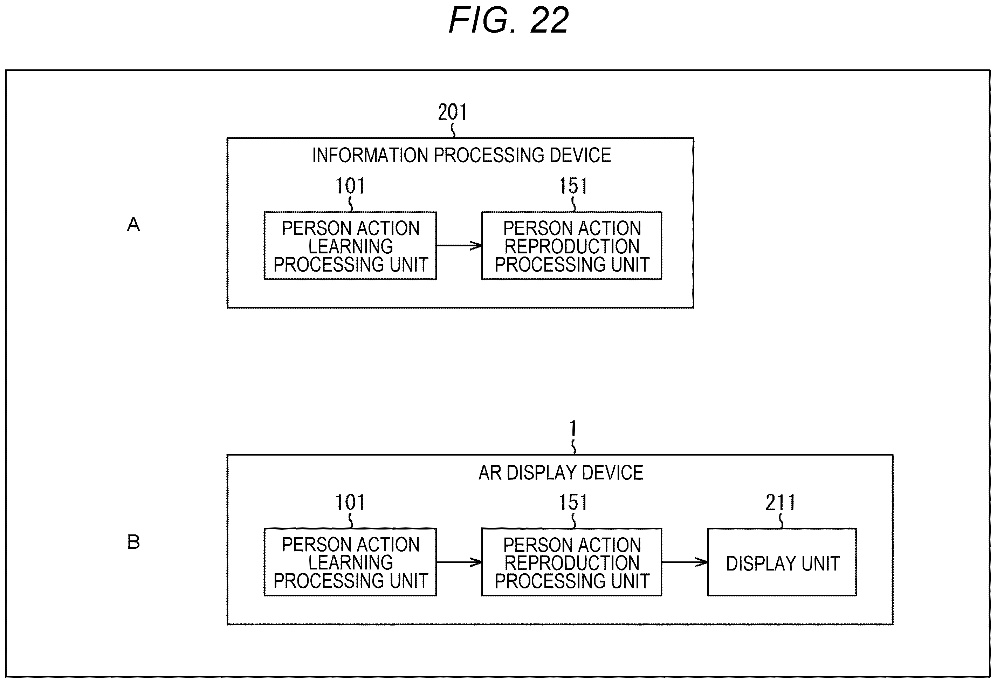

Fig. 22 is a block diagram illustrating a configuration example of the information processing system.

In the above description, the person action learning processing unit 101 and the person action reproduction processing unit 151 are implemented in different devices but may be implemented in the information processing device 201 that is a single device as illustrated in A of Fig. 22.

In the information processing device 201, the person action learning processing unit 101 performs the processing in the person action learning phase, and the person action reproduction processing unit 151 performs the processing in the person action reproduction phase. The person action reproduction processing unit 151 of the information processing device 201 performs the processing in the person action reproduction phase and displays an avatar that reproduces a predicted action on the AR display device 1.

As illustrated in B of Fig. 22, the person action learning processing unit 101 and the person action reproduction processing unit 151 may be implemented in the AR display device 1.

The person action reproduction processing unit 151 of the AR display device 1 performs the processing in the person action reproduction phase and displays an avatar that reproduces a predicted action on a display unit 211. The display unit 211 includes a display or the like that shows an avatar.

### <Others>

Although the case where the action of talking or the action of sitting on a sofa is reproduced as a person action by an avatar has been mainly described, it is also possible to cause the avatar to reproduce various actions other than these actions.

The series of processing steps described above may be performed by hardware, or may be performed by software. In a case where the series of processing steps is performed by software, a program included in the software is installed from a program recording medium on a computer incorporated in dedicated hardware, a general-purpose personal computer, or the like.

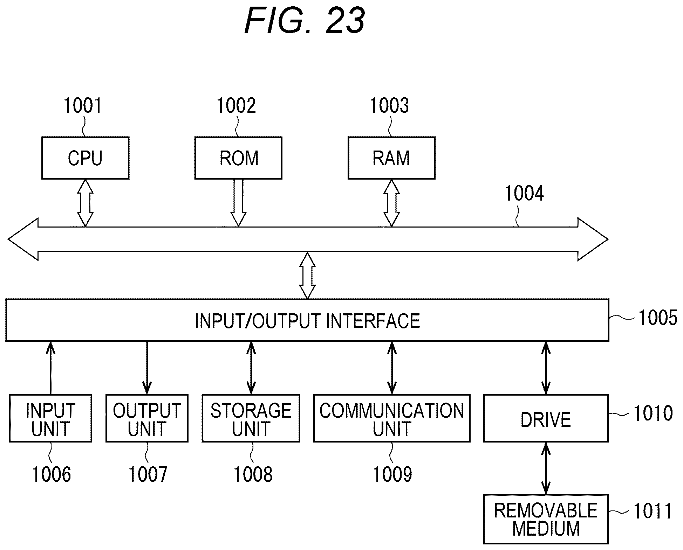

Fig. 23 is a block diagram illustrating a configuration example of hardware of a computer that performs the series of processing steps described above in accordance with the program. The computer functioning as the information processing device 12 and the information processing device 22 has a configuration similar to the configuration illustrated in Fig. 23.

A central processing unit (CPU) 1001, a read only memory (ROM) 1002, and a random access memory (RAM) 1003 are interconnected via a bus 1004.

An input/output interface 1005 is further connected to the bus 1004. The input/output interface 1005 is connected with an input unit 1006 including, for example, a keyboard and a mouse, and an output unit 1007 including, for example, a display and a speaker. Furthermore, the input/output interface 1005 is connected with a storage unit 1008 including, for example, a hard disk and a nonvolatile memory, a communication unit 1009 including, for example, a network interface, and a drive 1010 that drives a removable medium 1011. The time-series person action DB is constructed in the storage unit 1008.

In the computer configured as described above, for example, the CPU 1001 loads the program stored in the storage unit 1008 into the RAM 1003 via the input/output interface 1005 and the bus 1004 and executes the program, thereby implementing the person action learning processing unit 101 and the person action reproduction processing unit 151.

The program executed by the CPU 1001 is provided, for example, by being recorded on the removable medium 1011 or via a wired or wireless transmission medium such as a local area network, the Internet, or digital broadcasting, and is installed on the storage unit 1008.

The program executed by the computer may be a program configured to perform the processing in temporal sequence in accordance with the order described in the present specification, or may be a program configured to perform the processing in parallel or at necessary timings such as when a call is made.

In the present specification, a system means a set of a plurality of components (devices, modules (parts), and the like), and it does not matter whether or not all the components are in the same housing. Therefore, a plurality of devices housed in separate housings and connected to each other via a network and a single device including a plurality of modules housed in a single housing are both systems.

The effects described in the present specification are merely illustrative and not intended to be limiting, and other effects may be achieved.

The embodiments of the present technology are not limited to the above-described embodiments, and various modifications can be made without departing from the gist of the present technology.

For example, the present technology may be embodied in cloud computing in which a single function is shared and processed by a plurality of devices in cooperation via a network.

Furthermore, each step described in the flowcharts described above may be performed by a single device or may be performed by a plurality of devices in a distributed manner.

Moreover, in a case where a single step includes a plurality of processing steps, the plurality of processing steps included in the single step may be performed by a single device or performed by a plurality of devices in a distributed manner.

### <Examples of configuration combinations>

The present technology may also have the following configurations.

(1) An information processing device including:
   an information processing unit configured to:
   generate, on the basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and
   select an action to be reproduced by the second avatar on the basis of a similar scene graph including a graph structure similar to a graph structure of the first scene graph, the similar scene graph being included in a plurality of second scene graphs, the plurality of second scene graphs being generated in advance on the basis of a sensor measurement result indicating a plurality of arbitrary objects including a plurality of arbitrary persons and including nodes that represent the plurality of arbitrary objects at different times and are connected by a change edge representing a temporal change in state.
(2) The information processing device according to the above (1), in which
   the graph structure of the first scene graph further includes a relationship edge that connects nodes representing the plurality of objects at each time and represents a relationship between the plurality of objects.
(3) The information processing device according to the above (1) or (2), in which
   the change edge of the first scene graph includes:
   a first edge representing a temporal change in state of a same person; and
   a second edge representing a change in positional relationship between the plurality of objects.
(4) The information processing device according to the above (3), further including:
   a recognition unit configured to recognize the action of the first person and the action of the second person, in which
   the information processing unit generates the first scene graph using the first edge, the first edge representing the temporal change in state of the same person with a time series of likelihood of a recognition result from the recognition unit.
(5) The information processing device according to the above (3) or (4), in which
   the second edge includes:
   an edge representing a change in person-to-surrounding object positional relationship, the edge connecting a node representing the first person or the second person and a node representing a surrounding object; and
   an edge representing a change in person-to-person positional relationship, the edge connecting the nodes representing the first person and the second person.
(6) The information processing device according to any one of the above (3) to (5), in which
   the information processing unit selects, as the action to be reproduced by the second avatar, an action that achieves a change in state represented by the first edge connected to a node representing the second person in the similar scene graph.
(7) The information processing device according to the above (6), in which
   the information processing unit adjusts a speed of the action to be reproduced by the second avatar in accordance with a difference in layout between a reproduced space where the first person is present and a space measured during generation of the similar scene graph.
(8) The information processing device according to any one of the above (3) to (7), in which
   the information processing unit selects, as a destination of the second avatar, a position of a surrounding object represented by a node connected to a node representing the second person by the second edge in the similar scene graph.
(9) The information processing device according to the above (8), in which
   in a case where a plurality of nodes equivalent to the node connected to the node representing the second person by the second edge is included in the first scene graph, the information processing unit selects movement of the second avatar to a position of a surrounding object represented by one of the plurality of nodes on the basis of a change in appearance of the second avatar due to movement to the plurality of nodes.
(10) An information processing method including:
   causing an information processing device to:
   generate, on the basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and
   select an action to be reproduced by the second avatar on the basis of a similar scene graph including a graph structure similar to a graph structure of the first scene graph, the similar scene graph being included in a plurality of second scene graphs, the plurality of second scene graphs being generated in advance on the basis of a sensor measurement result indicating a plurality of arbitrary objects including a plurality of arbitrary persons and including nodes that represent the plurality of arbitrary objects at different times and are connected by a change edge representing a temporal change in state.
(11) A recording medium storing a program for causing a computer to perform processing, the processing including:
   generating, on the basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and
   selecting an action to be reproduced by the second avatar on the basis of a similar scene graph including a graph structure similar to a graph structure of the first scene graph, the similar scene graph being included in a plurality of second scene graphs, the plurality of second scene graphs being generated in advance on the basis of a sensor measurement result indicating a plurality of arbitrary objects including a plurality of arbitrary persons and including nodes that represent the plurality of arbitrary objects at different times and are connected by a change edge representing a temporal change in state.
(12) An information processing device including:
   a generation unit configured to generate a scene graph on the basis of a sensor measurement result indicating a plurality of objects including a plurality of persons, the scene graph including:
   nodes that represent the plurality of objects at each time and are connected by a relationship edge representing a relationship between the plurality of objects; and
   nodes that represent the plurality of objects at different times and are connected by a change edge representing a temporal change in state.
(13) The information processing device according to the above (12), in which
   the change edge of the scene graph includes:
   a first edge representing a temporal change in state of a same person; and
   a second edge representing a change in positional relationship between the plurality of objects.
(14) The information processing device according to the above (13), further including:
   a recognition unit configured to recognize an action of a person, in which
   the generation unit generates the scene graph using the first edge, the first edge representing the temporal change in state of the same person with a time series of likelihood of a recognition result from the recognition unit.
(15) The information processing device according to the above (13) or (14), in which
   the second edge includes:
   an edge representing a change in person-to-surrounding object positional relationship, the edge connecting a node representing a person and a node representing a surrounding object; and
   an edge representing a change in person-to-person positional relationship, the edge connecting nodes representing persons.
(16) The information processing device according to any one of the above (12) to (15), in which
   the generation unit generates the scene graph upon a change in positional relationship between the objects.
(17) An information processing method including:
   causing an information processing device to:
   generate a scene graph on the basis of a sensor measurement result indicating a plurality of objects including a plurality of persons, the scene graph including:
   nodes that represent the plurality of objects at each time and are connected by a relationship edge representing a relationship between the plurality of objects; and
   nodes that represent the plurality of objects at different times and are connected by a change edge representing a temporal change in state.
(18) A recording medium storing a program for causing a computer to perform processing, the processing including:
   generating a scene graph on the basis of a sensor measurement result indicating a plurality of objects including a plurality of persons, the scene graph including:
   nodes that represent the plurality of objects at each time and are connected by a relationship edge representing a relationship between the plurality of objects; and
   nodes that represent the plurality of objects at different times and are connected by a change edge representing a temporal change in state.

### REFERENCE SIGNS LIST

- 1: AR display device
- 11: Measurement device
- 12: Information processing device
- 21A, 21B: Measurement device
- 22A, 22B: Information processing device
- 101: Person action learning processing unit
- 111: Recognition unit
- 112: Spatiotemporal scene graph generation unit
- 113: Recording control unit
- 151: Person action reproduction processing unit
- 161: Recognition unit
- 162: Person action prediction unit
- 162A: Spatiotemporal scene graph generation unit
- 163: Presentation unit

## Claims

1. An information processing device comprising:
an information processing unit configured to:
generate, on a basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and
select an action to be reproduced by the second avatar on a basis of a similar scene graph including a graph structure similar to a graph structure of the first scene graph, the similar scene graph being included in a plurality of second scene graphs, the plurality of second scene graphs being generated in advance on a basis of a sensor measurement result indicating a plurality of arbitrary objects including a plurality of arbitrary persons and including nodes that represent the plurality of arbitrary objects at different times and are connected by a change edge representing a temporal change in state.

2. The information processing device according to claim 1, wherein
the graph structure of the first scene graph further includes a relationship edge that connects nodes representing the plurality of objects at each time and represents a relationship between the plurality of objects.

3. The information processing device according to claim 1, wherein
the change edge of the first scene graph includes:
a first edge representing a temporal change in state of a same person; and
a second edge representing a change in positional relationship between the plurality of objects.

4. The information processing device according to claim 3, further comprising:
a recognition unit configured to recognize the action of the first person and the action of the second person, wherein
the information processing unit generates the first scene graph using the first edge, the first edge representing the temporal change in state of the same person with a time series of likelihood of a recognition result from the recognition unit.

5. The information processing device according to claim 3, wherein
the second edge includes:
an edge representing a change in person-to-surrounding object positional relationship, the edge connecting a node representing the first person or the second person and a node representing a surrounding object; and
an edge representing a change in person-to-person positional relationship, the edge connecting the nodes representing the first person and the second person.

6. The information processing device according to claim 3, wherein
the information processing unit selects, as the action to be reproduced by the second avatar, an action that achieves a change in state represented by the first edge connected to a node representing the second person in the similar scene graph.

7. The information processing device according to claim 6, wherein
the information processing unit adjusts a speed of the action to be reproduced by the second avatar in accordance with a difference in layout between a reproduced space where the first person is present and a space measured during generation of the similar scene graph.

8. The information processing device according to claim 3, wherein
the information processing unit selects, as a destination of the second avatar, a position of a surrounding object represented by a node connected to a node representing the second person by the second edge in the similar scene graph.

9. The information processing device according to claim 8, wherein
in a case where a plurality of nodes equivalent to the node connected to the node representing the second person by the second edge is included in the first scene graph, the information processing unit selects movement of the second avatar to a position of a surrounding object represented by one of the plurality of nodes on a basis of a change in appearance of the second avatar due to movement to the plurality of nodes.

10. An information processing method comprising:
causing an information processing device to:
generate, on a basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and
select an action to be reproduced by the second avatar on a basis of a similar scene graph including a graph structure similar to a graph structure of the first scene graph, the similar scene graph being included in a plurality of second scene graphs, the plurality of second scene graphs being generated in advance on a basis of a sensor measurement result indicating a plurality of arbitrary objects including a plurality of arbitrary persons and including nodes that represent the plurality of arbitrary objects at different times and are connected by a change edge representing a temporal change in state.

11. A recording medium storing a program for causing a computer to perform processing, the processing comprising:
generating, on a basis of a sensor measurement result indicating a plurality of objects, a first scene graph including nodes that represent the plurality of objects at different times and are connected by a change edge representing a temporal change in state, the plurality of objects including a first person watching a second avatar that reproduces an action corresponding to an action of a second person and the second person watching a first avatar that reproduces an action corresponding to an action of the first person; and
selecting an action to be reproduced by the second avatar on a basis of a similar scene graph including a graph structure similar to a graph structure of the first scene graph, the similar scene graph being included in a plurality of second scene graphs, the plurality of second scene graphs being generated in advance on a basis of a sensor measurement result indicating a plurality of arbitrary objects including a plurality of arbitrary persons and including nodes that represent the plurality of arbitrary objects at different times and are connected by a change edge representing a temporal change in state.

12. An information processing device comprising:
a generation unit configured to generate a scene graph on a basis of a sensor measurement result indicating a plurality of objects including a plurality of persons, the scene graph including:
nodes that represent the plurality of objects at each time and are connected by a relationship edge representing a relationship between the plurality of objects; and
nodes that represent the plurality of objects at different times and are connected by a change edge representing a temporal change in state.

13. The information processing device according to claim 12, wherein
the change edge of the scene graph includes:
a first edge representing a temporal change in state of a same person; and
a second edge representing a change in positional relationship between the plurality of objects.

14. The information processing device according to claim 13, further comprising:
a recognition unit configured to recognize an action of a person, wherein
the generation unit generates the scene graph using the first edge, the first edge representing the temporal change in state of the same person with a time series of likelihood of a recognition result from the recognition unit.

15. The information processing device according to claim 13, wherein
the second edge includes:
an edge representing a change in person-to-surrounding object positional relationship, the edge connecting a node representing a person and a node representing a surrounding object; and
an edge representing a change in person-to-person positional relationship, the edge connecting nodes representing persons.

16. The information processing device according to claim 12, wherein
the generation unit generates the scene graph upon a change in positional relationship between the objects.

17. An information processing method comprising:
causing an information processing device to:
generate a scene graph on a basis of a sensor measurement result indicating a plurality of objects including a plurality of persons, the scene graph including:
nodes that represent the plurality of objects at each time and are connected by a relationship edge representing a relationship between the plurality of objects; and
nodes that represent the plurality of objects at different times and are connected by a change edge representing a temporal change in state.

18. A recording medium storing a program for causing a computer to perform processing, the processing comprising:
generating a scene graph on a basis of a sensor measurement result indicating a plurality of objects including a plurality of persons, the scene graph including:
nodes that represent the plurality of objects at each time and are connected by a relationship edge representing a relationship between the plurality of objects; and
nodes that represent the plurality of objects at different times and are connected by a change edge representing a temporal change in state.
